# EUROPEAN PATENT APPLICATION

(11) **EP 2 903 327 A1**
(43) Date of publication of application: **05.08.2015**
(21) Application number: 13842071.6
(22) Date of filing: 02.09.2013
(51) Int. Cl.: H04W 28/02

(54) **METHOD, DEVICE AND SYSTEM FOR TRANSMITTING DATA THROUGH CONTROL PLANE SIGNALING**

(30) Priority: 28.09.2012 CN 201210370143
(71) Applicant: ZTE Corporation, Shenzhen, Guangdong 518057 (CN)
(72) Inventor: CUI, Yunpeng, Shenzhen Guangdong 518057 (CN); DAI, Qian, Shenzhen Guangdong 518057 (CN); MAO, Lei, Shenzhen Guangdong 518057 (CN); XU, Yingqi, Shenzhen Guangdong 518057 (CN)
(74) Representative: Novagraaf Technologies
(86) International application number: PCT/CN2013/082810
(87) International publication number: WO 2014/048224

(57) **Abstract**

Provided are a method, a device and a system for transmitting data through control plane signaling. The method comprises: a user equipment determining whether the data volume of currently-to-be-transmitted data exceeds a threshold; if the data volume of the currently-to-be-transmitted data exceeds the threshold, the user equipment sending the currently-to-be-transmitted data to an access network device in multiple transmissions by bearing each part of the currently-to-be-transmitted data in a non-access stadium protocol data unit (NAS PDU) in radio resource control (RRC) signaling in each transmission, wherein the RRC signaling carrying data transmission control information and the data transmission control information being used to instruct the access network device to buffer currently-received data. Through the present invention, data whose data volume exceeds the threshold is sent to the access network device through control plane messages in multiple times, so as to reduce signaling overhead caused by data transmission, solve the problem that the method for sending data through control plane signaling in the related art cannot complete sending with a large data volume, optimize network performance, and improve system efficiency.

## Description

### Technical Field

The present invention relates to the field of mobile communication, and in particular to a method, device and system for transmitting data through control plane signaling.

### Background

M2M (Machine-to-machine) communication, also called as MTC (Machine Type Communication), is a novel communication concept in recent years. Services between MTCs have caused wide attention and wide application, e.g., intelligent household and logistics monitoring. Meanwhile, with the continuous improvement of people's living standards, intelligent terminals satisfying personalized requirements of users, such as smart phones and tablet computers, show a strong momentum. With the rapid development of wireless communication technology, the types of services running on intelligent terminals are also increasing, e.g., online game and streaming video. In many application scenarios of MTC and intelligent terminals, the data volume transmitted by a MTC device or intelligent terminal is not large (dozens of bytes to hundreds of bytes generally), and one data transmission only occupies a small amount of physical resources.

At present, in the current LTE (Long-Term Evolution) standards, user equipment needs to send data according to the technology in the related art, i.e., establish a Data Radio Bearer (DRB) and S1 bearer through signaling and then send data to a network side through the DRB and S1 bearer. The data transmission using this technology may generate great signaling overhead comparing with the data transmission volume, which greatly reduces the system efficiency.

Aiming at the above-mentioned problem, a solution of sending data through control plane signaling is proposed in the related art. The solution generally includes two solutions respectively described as follows. In one solution, sending data through control plane signaling is implemented by adding data to a non-access stratum (NAS) message, the used NAS message may be a Tracking Area Update (TAU) message, attach message, service request message, etc. In the other solution, data is sent through a Short Message Service (SMS). The method for sending data through the NAS message is intended for the case of a single small data packet. Although the method enables sending of data, since the data volume that can be carried by control plane signaling is influenced by factors such as resource allocation and the size of control plane signaling, this solution is only suitable for very small data packet (a few bytes to dozens of bytes). The method for sending data through the SMS is intended for the case of a small data volume, and has a data transmission volume of about 100 bytes. For the case of a larger data volume, both of the two solutions send data through user plane signaling, and the problem of low system efficiency still exists. Hence, with respect to a large number of services of user equipment (the data packet being dozens of bytes to hundreds of bytes), the methods for sending data through control plane signaling in the related art cannot send all data.

Aiming at the problem that the method for sending data through control plane signaling in the related art cannot send a large data volume, no effective solution has been proposed at present.

### Summary

Aiming at the problem that the above-mentioned methods for sending data through control plane signaling cannot send a large data volume, embodiments in the present invention provide a method, device and system for transmitting data through control plane signaling, so as to at least solve the above-mentioned problem.

According to one example of an embodiment in the present invention, provided is a method for transmitting data through control plane signaling. The method includes: user equipment determining whether the data volume of currently-to-be-transmitted data exceeds a threshold; and if the data volume of the currently-to-be-transmitted data exceeds the threshold, the user equipment sending the currently-to-be-transmitted data to an access network device in multiple transmissions by bearing each part of the currently-to-be-transmitted data in a non-access stadium protocol data unit (NAS PDU) in radio resource control (RRC) signaling in each transmission, wherein the RRC signaling carries data transmission control information, and the data transmission control information is used to instruct the access network device to buffer currently-received data.

In an example embodiment, the above-mentioned data transmission control information includes at least one of the following: data indication information used for indicating the current data transmission through RRC signaling; data transmission finish indication information used for indicating whether the data transmission is finished; data packet control information used for indicating the transmission condition of the currently-to-be-transmitted data to the access network device; and buffer status report BSR for indicating whether there is data to be sent subsequently.

In an example embodiment, the method for carrying the above-mentioned data indication information includes one of the following: the data indication information being carried in an information element (IE) added in RRC signaling; the data indication information being carried in a media access control element (MAC CE) added in RRC signaling; the data indication information being carried in reserved bits in MAC subheader.

In an example embodiment, the method for carrying the above-mentioned data transmission finish indication information includes one of the following: the data transmission finish indication information being carried in an information element (IE) added in RRC signaling; the data transmission finish indication information being carried in a media access control element (MAC CE) added in RRC signaling; and the data transmission finish indication information being carried in reserved bits in MAC subheader.

In an example embodiment, the above-mentioned data packet control information includes at least one of the following: transmission unfinished data volume; the number of data packet; and sending times of a single data packet.

In an example embodiment, the above-mentioned RRC signaling includes at least one of the following: an RRC connection establishment finish message; an up link information transfer message; and a customized message.

In an example embodiment, after the above-mentioned user equipment finishes the sending of the currently-to-be-transmitted data, the above-mentioned method also includes: the user equipment receiving signaling which is sent from an access network device or a core network device; and the user equipment establishing a subsequent RRC connection or releasing an RRC connection according to signaling.

According to another example of an embodiment in the present invention, provided is a method for transmitting data through control plane signaling. The method includes: an access network device receiving the data sent from user equipment, wherein the data is carried in an NAS PDU in RRC signaling; the access network device buffering the data according to the data transmission control information carried in the RRC signaling; the access network device determining whether the buffered data is complete according to the data transmission control information; if the data is complete, the access network device sending the buffered data to the core network device through S1 message, wherein the S1 message is a message supported by a logic interface between an eNB and a MME, the S1 message carrying the data transmission indication information.

In an example embodiment, the above-mentioned data transmission indication information includes: data indication information for indicating that data is sent through RRC signaling currently, and/or data transmission finish indication information for indicating whether the data transmission is finished.

In an example embodiment, the method of the above-mentioned access network device determining whether the buffered data is complete according to the data transmission control information includes one of the following: the access network device checking the buffer status report (BSR) in the data transmission control information, if the BSR indicates that no data is to be sent subsequently, determining that the buffered data is complete, or else, determining that the buffered data is incomplete; the access network device checking the data packet control information in the data transmission control information, if the data packet control information indicates that the number of the transmission unfinished data packet is the preset value, determining that the buffered data is complete, or else, determining that the buffered data is incomplete; or the access network device checking the data transmission finish indication information in the data transmission control information, if the data transmission finish indication information indicates that the data transmission is finished, determining that the buffered data is complete, or else, determining that the buffered data is incomplete.

In an example embodiment, the above-mentioned S1 message is one of the following: an initial user equipment message, an uplink non-access stadium transport message or a customized message.

In an example embodiment, after the above-mentioned access network device determines that the buffered data is complete, the method also includes: the access network device starting a data transmission control timer, when the data transmission control timer expires, the access network device executing one of the following steps: the access network device sends the buffered data to the core network device through S1 message, and finishes the subsequent process of connection establishment; or the access network device releases the RRC connection of the user equipment, and indicates a reason of releasing RRC connection release to the user.

In an example embodiment, the above-mentioned data transmission finish indication information is the data transmission finish indication information in the data transmission control information; or the data transmission finish indication information is generated by the access network device according to the result of determining whether the buffered data is complete.

According to another example of an embodiment in the present invention, provided is a method for transmitting data through control plane signaling. The method includes: the core network device receiving S1 message sent from the access network device, wherein the S1 message is a message supported by a logic interface between an eNB and a MME, the S1 message carries data and data transmission indication information; the core network device determining whether the data is to be sent to a subsequent core network node, if the data is to be sent to the subsequent core network node, the core network device sending the data transmission to the subsequent core network node, if the data is not to be sent to the subsequent core network node, the core network device discarding the data; and the core network device executing a subsequent RRC connection or releasing an RRC connection.

In an example embodiment, the method of the above-mentioned core network device determining whether the data is to be sent to a subsequent core network node includes at least one of the following: the core network device determining whether the data is to be sent to the subsequent core network node according to the user equipment subscription information corresponding to the data; the core network device determining whether the data is to be sent to the subsequent core network node according to the data transmission indication information.

In an example embodiment, the above-mentioned core network device determines to execute the subsequent RRC connection or release the RRC connection according to one of the following information: user equipment subscription information corresponding to the data, information about whether there is downlink data to be sent in a specific time after the core network device sends data to a subsequent node, information pre-negotiated between the core network device and the user equipment corresponding to the data.

An embodiment in the present invention also provides user equipment, including: a data volume determination component which is set to determine whether the data volume of currently-to-be-transmitted data exceeds a threshold; and a to-be-transmitted data sending component which is set to, if the determination result of the data volume determination component is that the data volume of the currently-to-be-transmitted data exceeds the threshold, send the currently-to-be-transmitted data to an access network device in multiple transmissions by bearing each part of the currently-to-be-transmitted data in a NAS PDU in RRC signaling in each transmission, wherein the RRC signaling carries data transmission control information, and the data transmission control information is used to instruct the access network device to buffer currently-received data.

In an example embodiment, the above-mentioned user equipment also includes: a signaling receiving component which is set to receive signaling which is sent from an access network device or a core network device;
a connection processing component which is set to establish a subsequent RRC connection or release the RRC connection according to signaling received by the signaling receiving component.

An embodiment in the present invention also provides an access network device, including: a data receiving component which is set to receive the data from user equipment, wherein the data is carried in an NAS PDU in RRC signaling; a data buffer component which is set to buffer the data received by the data receiving component according to the data transmission control information carried in RRC signaling; a complete data determination component which is set to determine whether the data buffered in the data buffer component is complete according to the data transmission control information; and a data sending component which is set to, if the determination result of the complete data determination component is that the buffered data is complete, send the buffered data to the core network device through S1 message, wherein the S1 message is a message supported by a logic interface between an eNB and a MME, and the S1 message carries the data transmission indication information.

In an example embodiment, the above-mentioned access network device also includes: a timer starting component which is set to, if the complete data determination component determines that the buffered data is incomplete, start the data transmission control timer; and a timing processing component which is set to, when the data transmission control timer started by the timer starting component expires, send the buffered data to the core network device through the S1 message and finish the subsequent process of connection establishment, or release the RRC connection of the user equipment and indicate a reason of releasing the RRC connection to the user.

An embodiment in the present invention also provides a core network device, including: a message receiving component which is set to receive an S1 message sent from an access network device, wherein the S1 message is a message supported by a logic interface between an eNB and a MME, and the S1 message carries data and data transmission indication information; a determination component which is set to determine whether the data in an S1 message received by the message receiving component is to be sent to a subsequent core network node; a data processing component which is set to send the data to the subsequent core network node if the determination result of the determination component is that the data in the S1 message received by the message receiving component is to be sent to the subsequent core network node, or discard the data if the determination result of the determination component is that the data in the S1 message received by the message receiving component is not to be sent to the subsequent core network node; and a connection processing component which is set to execute a subsequent RRC connection or release an RRC connection after the data processing component finishes processing of the data.

An embodiment in the present invention also provides a system for transmitting data through control plane signaling, including the above-mentioned user equipment, the access network device and the core network device.

Through the embodiments in the present invention, data whose data volume exceeds the threshold is sent to the access network device through control plane messages in multiple times, so as to reduce signaling overhead caused by data transmission, solve the problem that the method for sending data through control plane signaling in the related art cannot complete sending with a large data volume, optimize network performance, and improve system efficiency.

### Brief Description of the Drawings

Drawings, provided for further understanding of the embodiments in the present invention and forming a part of the specification, are used to explain the present invention together with embodiments of the present invention rather than to limit the present invention. In the drawings:
FIG. 1 shows a flowchart of a method for transmitting data through control plane signaling, described from user equipment side, according to an embodiment in the present invention;
FIG. 2 shows a flowchart of a method for transmitting data through control plane signaling, described from an access network device side, according to an embodiment in the present invention;
FIG. 3 shows a flowchart of a method for transmitting data through control plane signaling, described from a core network device side, according to an embodiment in the present invention;
FIG. 4 shows a structure diagram of user equipment according to an embodiment in the present invention;
FIG. 5 shows a structure diagram of an access network device according to an embodiment of the present invention;
FIG. 6 shows a structure diagram of a core network device according to an embodiment of the present invention;
FIG. 7 shows a structure diagram of a system for transmitting data through control plane signaling according to an embodiment in the present invention;
FIG. 8 shows a flowchart of a process of user equipment continuing finishing a subsequent connection establishment after sending data according to Example 1 in the present invention;
FIG. 9 shows a flowchart of a process of user equipment releasing an RRC connection after sending data according to Example 2 in the present invention;
FIG. 10 shows a flowchart of user equipment sending data through both of an RRC connection establishment finish message and a new RRC message, and an access network device sending data through an initial user equipment message and releasing RRC connection after data transmission is finished, according to Example 3 in the present invention;
FIG. 11 shows a flowchart of user equipment sending data through both of an RRC connection establishment finish message and an up-link information transfer message, and an access network device sending data through an uplink non-access stadium transport message and continuing finishing a subsequent connection establishment after data transmission is finished, according to Example 4 in the present invention;
FIG. 12 shows a flowchart of user equipment sending data only through a new RRC message, and an access network device sending data through a new S1 message and continuing finishing a subsequent connection establishment after data transmission is finished, according to Example 5 in the present invention.
FIG. 13 shows a flowchart of user equipment sending data only through an up link information transfer message, and an access network device sending data through a new S1 message and releasing an RRC connection after data transmission is finished, according to Example 6 in the present invention;
FIG. 14 shows a flowchart of user equipment sending data only through a new RRC message, and an access network device sending data through an initial user equipment message and continuing finishing a subsequent connection establishment after data transmission is finished, according to Example 7 in the present invention.
FIG. 15 shows a flowchart of user equipment sending data only through an RRC connection establishment finish message, and eNB starting an RRC connection release process because a data control timer in eNB is time-out, according to Example 8 in the present invention;
FIG. 16 shows a flowchart of user equipment sending data only through an RRC connection establishment finish message, and an access network device sending data through an initial user equipment message and continuing finishing a subsequent connection establishment after data transmission is finished, according to Example 9 in the present invention;
FIG. 17 shows a flowchart of user equipment sending data only through an RRC connection establishment finish message, and an access network device sending data using a new S1 message and releasing an RRC connection after data transmission is finished, according to Example 10 in the present invention;
FIG. 18 shows a flowchart of user equipment sending data only through an RRC connection establishment finish message, and eNB continuing performing a subsequent RRC connection establishment process when a data control timer in eNB is time-out, according to Example 11 in the present invention; and
FIG. 19 shows a schematic diagram of bit allocation for the first byte in the MAC subheader according to an example in the present invention.

### Detailed Description of the Embodiments

The present invention is described below in detail with reference to the accompanying drawings in conjunction with embodiments. It should be noted that the embodiments and the characteristics of the embodiments can be combined with each other if no conflict is caused.

Considering the case that the data transmission through control plane signaling in related art usually cannot transmit a data volume which is in a certain range or transmit multiple data packets, the embodiments in the present invention optimize the method for transmitting data through control plane signaling so as to reduce signaling overhead caused by data transmission, optimize network performance and improve system efficiency. On this basis, an embodiment in the present invention provides a method, device and system for transmitting data through control plane signaling. Description will be made below through following embodiments.

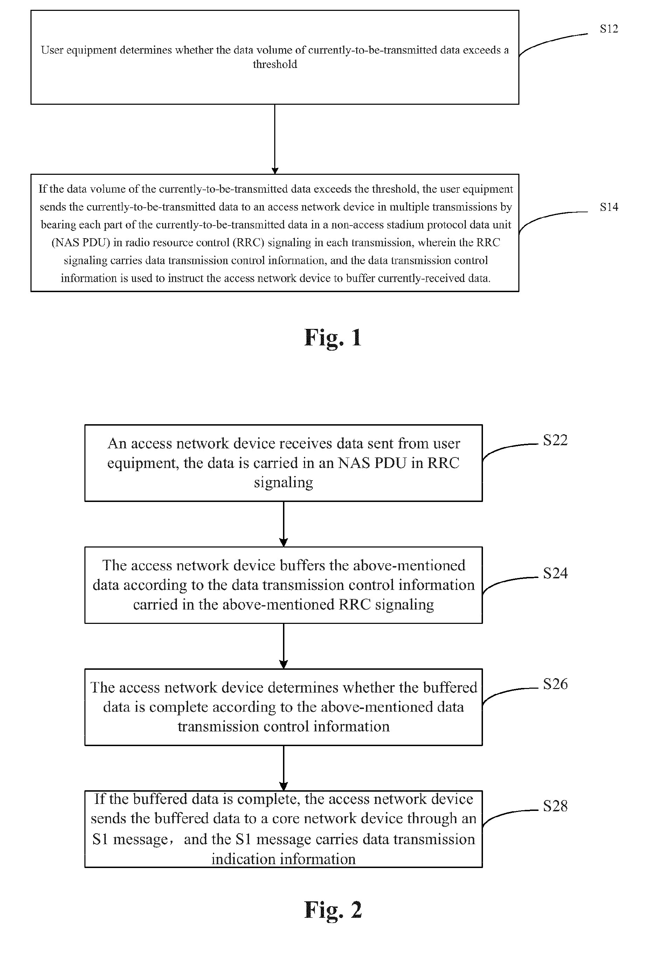

FIG. 1 shows a flowchart of a method for transmitting data through control plane signaling, described from user equipment side. The method includes the following steps:
Step S12, user equipment determines whether the data volume of currently-to-be-transmitted data exceeds a threshold, the threshold may be set according to the actual conditions, e.g. 1000 bytes, so that in the case when the data volume of to-be-transmitted data is in a certain range or there are multiple data packets, the to-be-transmitted data may be classified as the large data volume; and
   the user equipment in this embodiment in the present invention may be a common terminal device, e.g., a mobile phone, or may be a MTC device.
Step S14, if the data volume of the currently-to-be-transmitted data exceeds the threshold, the user equipment sends the currently-to-be-transmitted data to an access network device in multiple transmissions by bearing each part of the currently-to-be-transmitted data in a NAS PDU in RRC signaling in each transmission, wherein the RRC signaling in this embodiment carries data transmission control information, and the data transmission control information is used to instruct the access network device to buffer currently-received data.

In this embodiment, the data whose data volume exceeds the threshold is sent to the access network device through a control plane message in multiple times so as to reduce signaling overhead caused by data transmission and solve the problem that the method for sending data through control plane signaling in the related art cannot send a large data volume, optimize network performance and improve system efficiency.

For instructing the access network device to buffer the currently-received data or not, according to the actual conditions, it can be implemented by many methods. On this basis, in this embodiment in the present invention, the data transmission control information includes at least one of the following:
1) data indication information used for indicating that data is sent through RRC signaling currently;
2) data transmission finish indication information used for indicating whether the data transmission is finished;
3) data packet control information used for indicating transmission condition of the currently-to-be-transmitted data for the access network device, e.g., the message being a preset value (e.g., "0") indicates that the data transmission is finished, or else, indicating that the data transmission is unfinished; and
4) Buffer Status Report (BSR) used for indicating whether there is data to be sent subsequently, if the BSR indicates that no data is to be sent subsequently, it indicates that the data transmission is finished, or else, the data transmission is unfinished.

The above-mentioned data transmission control information can be implemented in flexible ways so as to satisfy requirements of different user equipment.

Considering the structure of the existing RRC signaling, for reducing the cost of development and being compatible with existing equipment, the method for carrying the above-mentioned data indication information may include one of the following: the data indication information being carried in an Information Element (IE) added in RRC signaling; the data indication information being carried in a Media Access Control (MAC) Control Element (CE) added in RRC signaling; or the data indication information being carried in a reserved bit in MAC subheader.

The same as the above-mentioned data indication information, the method for carrying the above-mentioned data transmission finish indication information may also include one of the following: the data transmission finish indication information being carried in an IE added in RRC signaling; the data transmission finish indication information being carried in an MAC CE added in RRC signaling; the data transmission finish indication information being carried in reserved bits in MAC subheader.

In an example embodiment, the above-mentioned data packet control information includes at least one of the following: transmission unfinished data volume; the number of data packet; and sending times of a single data packet. This method is implemented simply and has small signaling overhead.

The above-mentioned RRC signaling includes at least one of the following: an RRC connection establishment finish message; an Up Link Information Transfer Message; or a new RRC message which may be a customized message according to practical application requirements. This method may enhance the flexibility of implementation to adapt to various application requirements.

In this embodiment, after the user equipment has sent the currently-to-be-transmitted data, the above-mentioned method may also include: the user equipment receiving signaling which is sent from an access network device or a core network device; and establishing a subsequent RRC connection or releasing an RRC connection according to signaling. This processing method may ensure integrity of the subsequent process.

FIG. 2 shows a flowchart of a method for transmitting data through control plane signaling, described from an access network. The method includes the following steps:
Step S22, an access network device receives data sent from user equipment, the data is carried in an NAS PDU in RRC signaling;
Step S24, the access network device buffers the above-mentioned data according to the data transmission control information carried in the above-mentioned RRC signaling, i.e., if the access network device finds data transmission control information in RRC signaling, it can be determined that the user equipment transmits a large volume of data in multiple times, and thus buffering the current data;
Step S26, the access network device determines whether the buffered data is complete according to the above-mentioned data transmission control information; and
Step S28, if the buffered data is complete, the access network device sends the buffered data to a core network device through an S1 message which is a message supported by a logic interface between an Evolved Universal Terrestrial Radio Access Network (E-UTRAN) Node B (eNB) and a Mobility Management Entity (MME), and the S1 message carries data transmission indication information.

For the case the buffered data is incomplete, it is required to continue receiving the data from the user equipment, and if the data of the user equipment is not received in a long period of time, the processing in a manner of discarding the buffered data may be adopted, or the access network device may send the buffered data to the core network device first, which can be selected according to practical requirements.

In this embodiment, after receiving the data from the user equipment, the access network device buffers the data first, and then sends the data to the core network device after the buffered data is complete so as to reduce signaling overhead caused by data transmission and solve the problem that the method for sending data through control plane signaling in the related art cannot send a large data volume, optimize network performance and improve system efficiency.

The above-mentioned data transmission indication information includes: data indication information for indicating the current data transmission through RRC signaling, and/or data transmission finish indication information for indicating whether the data transmission is finished.

In this embodiment, the method of the access network device determining whether the buffered data is complete according to the data transmission control information carried in RRC signaling includes one of the following:
1) the access network device checks the buffer status report (BSR) in the data transmission control information, and if the BSR indicates that no data is to be sent subsequently, the access network determines that the buffered data is complete, or else, the buffered data is incomplete;
2) the access network device checks the data packet control information in the data transmission control information, and if the data packet control information indicates that the number of transmission unfinished data packets is a preset value, the access network determines that the buffered data is complete, or else, the buffered data is incomplete, for example, if the number of transmission unfinished data packets is a preset value (e.g., "0"), it indicates that the data transmission is finished, or else, the data transmission is unfinished; and
3) the access network device checks the data transmission finish indication information in the data transmission control information, and if the data transmission finish indication information indicates that the data transmission is finished, it is determined that the buffered data is complete, or else, the buffered data is incomplete.

In the specific implementation, the above-mentioned S1 message may be one of the following: an initial user equipment message (initial UE message), an uplink non-access stadium transport message (UPLINK NAS TRANSPORT) or a customized message.

In this embodiment, if the access network device determines that the buffered data is incomplete, the access network device starts a data transmission control timer (e.g., Tsmalldata), and when the data transmission control timer expires, the access network device may execute one of the following steps: the access network device sends the buffered data to the core network device through S1 message and finishes a subsequent connection establishment process; or the access network device releases the RRC connection of the user equipment, and indicates a reason of the RRC connection release to the user.

The above-mentioned access network device sends data transmission finish indication information to the core network device, the indication information is received from the user equipment or generated by the access network device according to the result of determining whether the data receiving is finished. On this basis, the above-mentioned data transmission finish indication information is the data transmission finish indication information in the data transmission control information; or the data transmission finish indication information is generated by the access network device according to the result of determining whether the buffered data is complete.

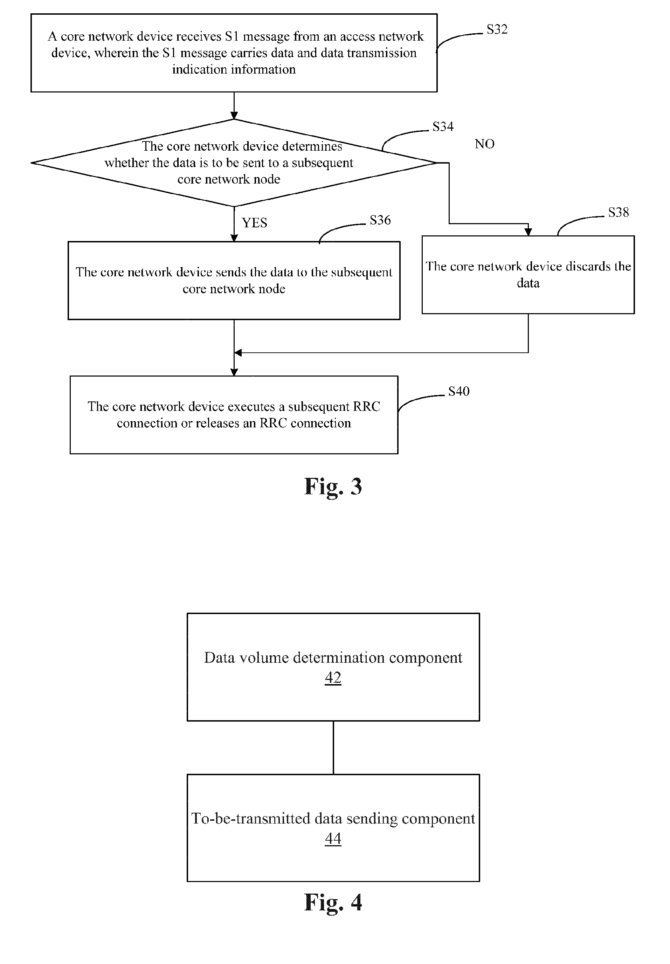

FIG. 3 shows a flowchart of a method for transmitting data through control plane signaling, described from a core network device side, provided by an embodiment in the present invention. The method includes the following steps:
Step S32, a core network device receives S1 message from an access network device, wherein the S1 message carries data and data transmission indication information; the data transmission indication information is as described above and will not described herein in detail;
Step S34, the core network device determines whether the data is to be sent to a subsequent core network node, if the data is to be sent to the subsequent core network node, Step S36 is executed, if the data is not to be sent to the subsequent core network node, Step S38 is executed;
Step S36, the core network device sends the data to the subsequent core network node;
Step S38, the core network device discards the data; and
Step S40, the core network device executes a subsequent RRC connection or releases an RRC connection.

In this embodiment, the core network device receives the data from the access network device through S1 message, so that receiving and processing operations for the data with a large data volume can be finished, so as to reduce signaling overhead caused by data transmission, solve the problem that the method for sending data through control plane signaling in the related art cannot send a large data volume, optimize network performance and improve system efficiency.

In this embodiment, the method of the above-mentioned core network device determining whether the data is to be sent to a subsequent core network node includes at least one of the following: the core network device determining whether the data is to be sent to the subsequent core network node according to the user equipment subscription information corresponding to the data; or the core network device determining whether the data is to be sent to the subsequent core network node according to the data transmission indication information.

The above-mentioned core network device determines to executes the subsequent RRC connection or release the RRC connection according to one of the following information: user equipment subscription information corresponding to the data, whether there is downlink data to be sent in a specific time after the core network device sends data to the subsequent node, information pre-negotiated between the core network device and the user equipment corresponding to the data.

Corresponding to the above-mentioned method, an embodiment in the present invention also provides user equipment. As shown in FIG. 4, a structure diagram of user equipment, the user equipment includes:
a data volume determination component 42 which is set to determine whether the data volume of currently-to-be-transmitted data exceeds a threshold; and
a to-be-transmitted data sending component 44 which is connected to the data volume determination component 42 and which is set to, if the determination result of the data volume determination component 42 is that the data volume of the currently-to-be-transmitted data exceeds the threshold, send the currently-to-be-transmitted data to an access network device in multiple transmissions by bearing each part of the currently-to-be-transmitted data in a NAS PDU in RRC signaling in each transmission, wherein the RRC signaling carries data transmission control information, and the data transmission control information is used to instruct the access network device to buffer currently-received data.

In this embodiment, the user equipment sends data whose data volume exceeds the threshold to the access network device through control plane messages in multiple times, so as to reduce signaling overhead caused by data transmission, solve the problem that the method for sending data through control plane signaling in the related art cannot send a large data volume, optimize network performance and improve system efficiency.

For finishing the subsequent process, the above-mentioned user equipment also includes: a signaling receiving component which is set to receive signaling which is sent from the access network device or the core network device; and a connection processing component which is connected to the signaling receiving component and which is set to establish a subsequent RRC connection or release an RRC connection according to signaling received by the signaling receiving component.

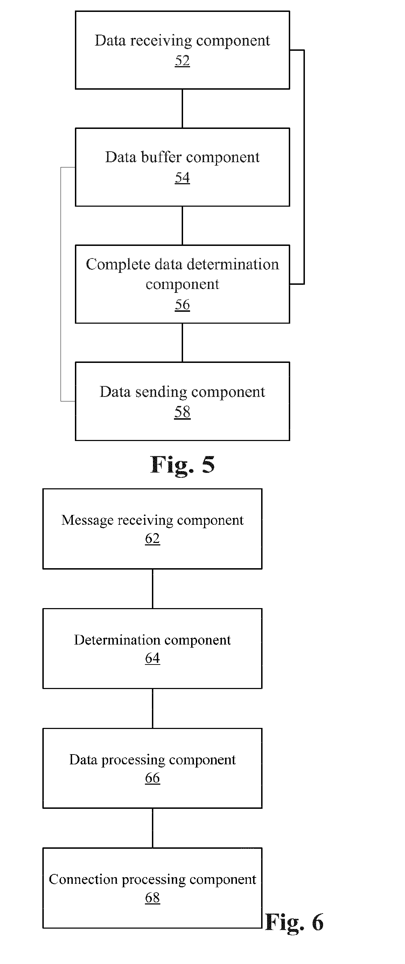

An embodiment in the present invention also provides an access network device. As shown in FIG. 5, a structure diagram of an access network device, the device includes:
a data receiving component 52 which is set to receive data from user equipment, wherein the data is carried in a non-access stadium protocol data unit (NAS PDU) in radio resource control (RRC) signaling;
a data buffer component 54 which is connected to the data receiving component 52 and which is set to buffer the data received by the data receiving component according to the data transmission control information carried in the above-mentioned RRC signaling;
a complete data determination component 56 which is connected to the data receiving component 52 and the data buffer component 54 and which is set to determine whether the buffered data of the data buffer component 54 is complete according to the above-mentioned data transmission control information; and
a data sending component 58 which is connected to the data buffer component 54 and the complete data determination component 56 and which is set to, if the determination result of the complete data determination component is that the buffered data is complete, send the buffered data to an core network device through an S1 message which carries data transmission indication information.

In this embodiment, after receiving the data from the user equipment, the access network device buffers the data first, and then sends the data to the core network device after the buffered data is complete, so as to reduce signaling overhead caused by data transmission, solve the problem that the method for sending data through control plane signaling in the related art cannot send a large data volume, optimize network performance and improve system efficiency.

In an example embodiment, the above-mentioned access network device also includes: a timer starting component which is connected to the complete data determination component 56 and which is set to, if the complete data determination component determines that the buffered data is incomplete, start the data transmission control timer; a timing processing component which is connected to the timer starting component and which is set to, when the data transmission control timer started by the timer starting component expires, send the buffered data to the core network device through S1 message and finish a subsequent connection establishment process, or release the RRC connection of the user equipment and indicate a reason of the RRC connection release for the user.

An embodiment in the present invention also provides a core network device. As shown in FIG. 6, a structure diagram of a core network device, the device includes:
a message receiving component 62 which is set to receive S1 message sent from an access network device, wherein the S1 message carries data and data transmission indication information;
a determination component 64 which is connected to the message receiving component 62 and which is set to determine whether the data in the S1 message received by the message receiving component 62 is to be sent to a subsequent core network node;
a data processing component 66 which is connected to the determination component 64 and which is set to send the data to the subsequent core network node if the determination result of the determination component 64 is that the data in the S 1 message received by the message receiving component 62 is to be sent to the subsequent core network node, or discard the data if the determination result of the determination component 64 is that the data in the S1 message received by the message receiving component 62 is not to be sent to the subsequent core network node; and
a connection processing component 68 which is connected to the data processing component 66 and which is set to execute a subsequent RRC connection or release an RRC connection after the data processing component 66 finishes processing of the data.

In this embodiment, the core network device receives the data from the access network device through an S1 message, so that receiving and processing operations for the data with a large data volume can be finished, so as to reduce signaling overhead caused by data transmission, solve the problem that the method for sending data through control plane signaling in the related art cannot send a large data volume, optimize network performance and improve system efficiency.

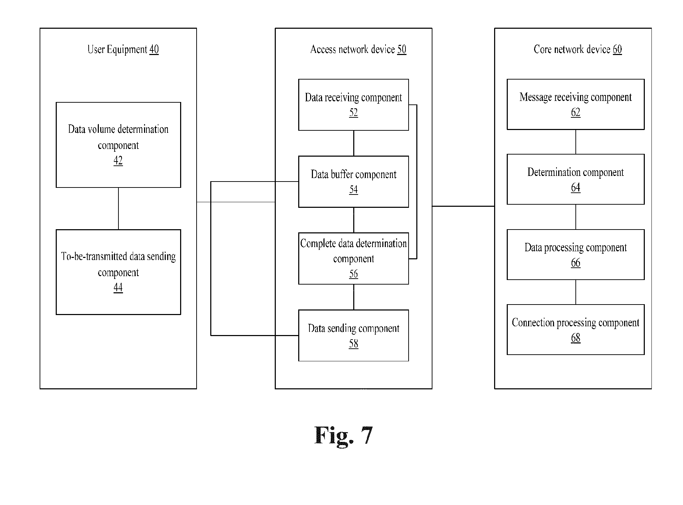

An embodiment in the present invention also provides a system for transmitting data through control plane signaling. As shown in FIG. 7, a structure diagram of a system for transmitting data through control plane signaling, the system includes user equipment 40, an access network device 50 and a core network device 60. All devices are as described above, the user equipment 40 in FIG. 7 is described by taking a structure shown in FIG. 4 as example, the access network device 50 is described by taking a structure shown in FIG. 5 as example, the core network device 60 is described by taking a structure shown in FIG. 6, and functions of all components are as described above. Herein will not further describe in detail.

The above-mentioned method for transmitting data through control plane signaling will be described below through specific examples embodiments.

### Example 1

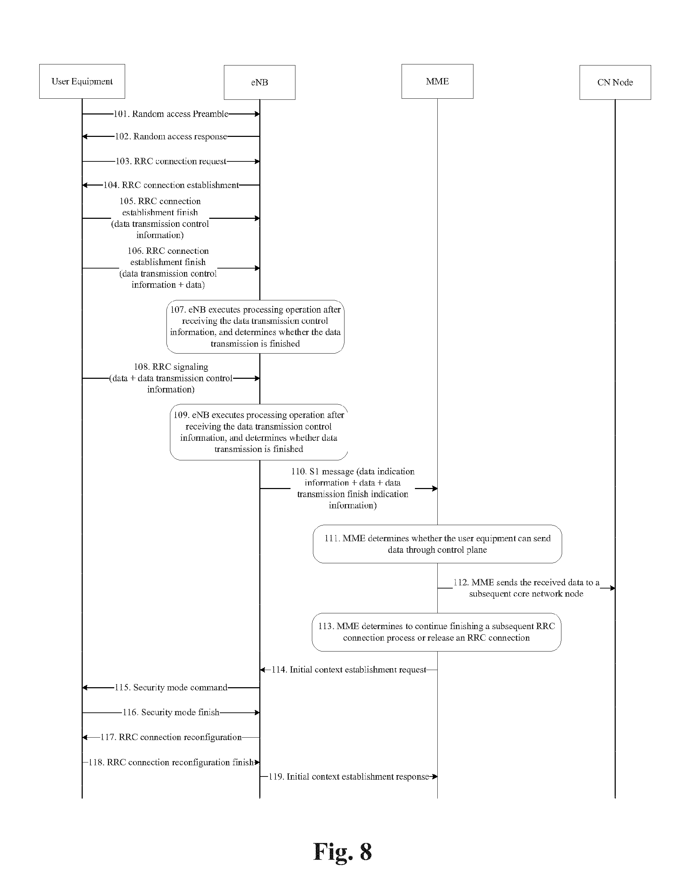

As shown in FIG. 8, a flowchart of a process of user equipment continuing finishing a subsequent connection establishment after sending data, the specific signaling process is described as follows.

Step 101: user equipment sends a random access Preamble to an eNB.

When the user equipment or an MTC device has to-be-transmitted data, the user equipment or the MTC device firstly selects a Preamble, and sends the Preamble to the eNB according to random access resource information configured in a system.

Step 102: the eNB sends a random access response message (Msg2) to the user equipment.

In this Example, the random access response message may include: Preamble identity corresponding to the random access Preamble transmitted by user equipment, uplink transmission timing adjustment, uplink resource allocation for an RRC connection request message, temporary C-RNTI (Cell-Radio Network Temporary Identity), etc.

Step 103: the user equipment sends an RRC connection request to the eNB.

After the user equipment receives Msg2, the user equipment sends an RRC connection establishment request message through the uplink resource allocated in the random access response message.

Step 104: the eNB sends an RRC connection establishment message to the user equipment.

The eNB sends the RRC connection establishment message to the user equipment to establish SRB1 (Signaling Radio Bearer 1), and allocates uplink resource used for the RRC connection establishment finish message for the user equipment.

Step 105: the user equipment sends an RRC connection establishment message to the eNB, wherein the message also carries data transmission control information.

The user equipment determines whether to send data through control plane signaling, according to the established SRB1 in the RRC connection establishment message, the allocated uplink resource and the volume of to-be-transmitted data or the number of data packets. If the user equipment determines to send data through control plane signaling, it further determines whether to carry data transmission control information and data in the RRC connection establishment finish message to be sent to the eNB according to the size of the allocated uplink resource or the pre-negotiation between the user equipment and the eNB; and if it is determined not to carry data in the RRC connection establishment finish message, Step 105 is executed, and Step 106 is skipped to execute Step 107.

The above-mentioned data transmission control information includes one of the following or a combination thereof:
data indication information used for indicating that data is sent through RRC signaling currently;
data transmission finish indication information used for indicating whether the data transmission is finished;
data packet control information used for indicating the transmission condition of data packet for the access network device, the preset value (e.g., "0") indicating that data transmission is finished, or else, indicating that data transmission is not finished; and
BSR, if the BSR indicates that no data is to be sent subsequently, it indicating that data transmission is finished, or else, indicating that data transmission is unfinished.

A method for sending the above-mentioned data transmission finish indication information may be one of the following:
adding a new IE to the RRC signaling for data transmission, and adding the data indication information to the new IE;
making the data indication information be borne in a new MAC CE; and
making the data indication information be borne in reserved bits in MAC subheader.

A method for sending the above-mentioned data indication information may be one of the following:
adding a new IE to the RRC signaling used for data transmission, and adding the data indication information to the new IE; making the data indication information be borne in a new MAC CE; and
making the data indication information be borne in reserved bits in MAC subheader.

Step 106: the user equipment sends an RRC connection establishment message to the eNB, the message also carries data transmission control information and data, the user equipment determines whether to send data through control plane signaling according to SRB1 established in the RRC connection establishment message, the allocated uplink resource, the size of to-be-transmitted data volume or the number of data packet. If the user equipment determines to send data through control plane signaling, it further determines whether to carry data transmission control information and data in the RRC connection establishment finish message to be sent to the eNB according to the size of the allocated uplink resource or the pre-negotiation between the user equipment and the eNB, and if it is determined not to make the RRC connection establishment finish message carry data and data transmission finish indication information, Step 106 is executed.

The above-mentioned data transmission control information includes one of the following or a combination thereof:
data indication information, used for indicating that data is sent through RRC signaling currently;
data transmission finish indication information, used for indicating whether the data transmission is finished;
data packet control information used for indicating the transmission condition of data packet for the access network device, the preset value (e.g., "0") indicating that data transmission is finished, or else, indicating that data transmission is not finished; and
BSR, if the BSR indicates that no data is to be sent subsequently, indicating that data transmission is finished, or else, indicating that data transmission is unfinished.

A method for sending the above-mentioned data indication information may be one of the following:
adding a new IE to the RRC signaling for data transmission, and adding the data indication information to the new IE;
making the data indication information be borne in a new MAC CE; and
making the data indication information be borne in reserved bits in MAC subheader.

A method for sending the data transmission finish indication information may be one of the following:
adding a new IE to the RRC signaling used for data transmission, and adding the data indication information to the new IE;
making the data indication information be borne in a new MAC CE; and
making the data indication information be borne in reserved bits in MAC subheader.

Step 107: the eNB executes processing operation after receiving the data transmission control information, and determines whether the data transmission is finished. The corresponding processing operation includes:
the eNB determining whether the data receiving is finished;
starting a data transmission control timer (e.g., Tsmalldata);
buffering the received data; and
allocating resource for the data which has not been transmitted by the user equipment.

Here, a method for the above-mentioned eNB determining whether the data receiving is finished may be one of the following:
determining through the BSR, if the BSR indicates that no data is to be sent subsequently, it indicating that data transmission is finished, or else, indicating that data transmission is unfinished;
determining through data packet control information, if the number of transmission unfinished data packet is "0", it indicating data transmission is finished, or else, indicating data transmission is not finished;
determining through data transmission finish indication information.

The above-mentioned data transmission control timer is used to control data transmission. If the timer expires, one of the following operations may be executed:
the access network device sending to the core network device an S1 message carrying data, data indication information and data transmission finish indication information, and finishing the subsequent connection establishment process; or the access network device releasing the RRC connection of the user equipment and indicating the reason of releasing the RRC connection.

Step 108: the user equipment sends data and data transmission control information through RRC signaling.

The user equipment sends data and data transmission control information to the eNB through RRC signaling. The RRC signaling may be one of the following:
an RRC connection establishment finish message;
an up link information transfer message; and
a new RRC message.

The above-mentioned data transmission control information includes one of the following or a combination thereof:
data indication information, used for indicating that data is sent through RRC signaling currently;
data transmission finish indication information, used for indicating whether the data transmission is finished;
data packet control information used for indicating the transmission condition of data packet for the access network device, the preset value (e.g., "0") indicating that data transmission is finished, or else, indicating that data transmission is not finished; and
BSR, if the BSR indicates that no data is to be sent subsequently, it indicating that data transmission is finished, or else, indicating that data transmission is unfinished.

A method for sending the above-mentioned data indication information may be one of the following:
adding a new IE to the RRC signaling for data transmission, and adding the data indication information to the new IE;
making the data indication information be borne in a new MAC CE; and
making the data indication information be borne in reserved bits in MAC subheader.

A method for sending the above-mentioned data transmission finish indication information may be one of the following:
adding a new IE to the RRC signaling for data transmission, and adding the data indication information to the new IE;
making the data indication information be borne in a new MAC CE; and
making the data indication information be borne in reserved bits in MAC subheader.

Step 109: the eNB executes processing operation after receiving the data transmission control information, and determines whether data transmission is finished.

A method of the eNB determining whether data receiving is finished may be one of the following:
determining through the BSR, if the BSR indicates that no data is to be sent subsequently, it indicating that data transmission is finished, or else, indicating that data transmission is unfinished;
determining through data packet control information, if the number of transmission unfinished data packet is "0", it indicating data transmission is finished, or else, indicating data transmission is not finished; or
determining through data transmission finish indication information.

If data receiving is finished, Step 110 is executed, if data receiving is unfinished, Step 108 and Step 109 continue to be executed until data receiving is finished or the data transmission control timer expires. In this Example, if the data transmission timer expires, Step 110 is executed.

Step 110: the eNB sends data, data indication information and data transmission finish indication information to an MME through an S1 message and stops the data control timer.

The above-mentioned S1 message may be one of the following: an initial user equipment message; an uplink non-access stadium transport message; or a new S1 message.

In this Example, a method for sending the data indication information to the core network device may be one of the following: the data indication information being added to the S1 message for sending data.

In this Example, a method for sending the data transmission finish indication information to the core network device may include: the data transmission finish indication information is added to the S1 message for sending data. The data transmission finish indication information may be received from the user equipment, or may be generated by the access network device according to the result of determining whether data receiving is finished.

Step 111: the MME determines whether the user equipment can send data through control plane.

The MME may determine whether the user equipment can send data through control plane according to the subscription information of the user equipment. In this Example, the user equipment may employ a data optimization method (i.e., the above-mentioned method provided by the embodiment in the present invention) to send data.

Step 112: the MME sends the received data to a subsequent core network node.

Step 113: the MME determines to continue finishing a subsequent RRC connection process or release an RRC connection.

The MME may determine to continue finishing a subsequent RRC connection process or release an RRC connection according to one of the following: according to user equipment subscription information; whether there is downlink data to be sent in a period of time after MME sends data to the subsequent node; or a pre-negotiation between the user equipment and the MME. In this Example, the MME continues finishing a subsequent RRC connection process.

Step 114: the MME sends an initial context establishment request message to the eNB.

The MME notifies the eNB of connection information corresponding to the user equipment. The connection information includes access stratum security context information, switch limit information, QoS (Quality of Service) information, tunnel terminal identity and address information of service gate way for user plane, etc.

Step 115: the eNB sends a security mode command message to the user equipment.

The eNB sends a security mode command to the user equipment or an MTC device to activate security of the user equipment.

Step 116: the user equipment sends a security mode finish message to the eNB.

The user equipment sends the security mode finish message to the eNB to notify the eNB that security is activated.

Step 117: the eNB sends an RRC connection reconfiguration message to the user equipment.

The eNB sends the RRC connection reconfiguration message to the user equipment to establish Data Radio Bearer (DRB) and Signaling Radio Bearer 2 (SRB2) for the user equipment.

It should be noted that Step 117 may also be carried out before Step 116.

Step 118: the user equipment sends an RRC connection reconfiguration finish message to the eNB.

The user equipment sends the RRC connection reconfiguration finish message to the eNB to notify the eNB that data radio bearer and SRB2 configuration is finished.

Step 119: the eNB sends an initial context establishment response message to the MME.

The initial context establishment response message sent by the eNB to the MME may carry tunnel terminal identity of the eNB and address information of the eNB for S1 interface user plane downlink service.

### Example 2

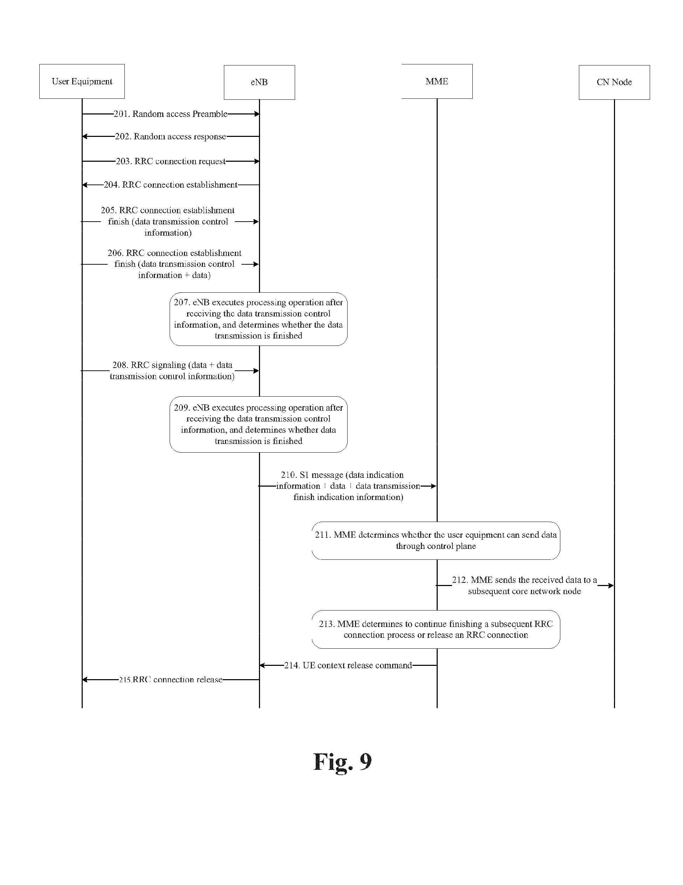

As shown in FIG. 9, a flowchart of a process of user equipment releasing an RRC connection after sending data, the process includes the following steps:
Step 201: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 202: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 203: the user equipment sends an RRC connection request to the eNB.

After the user equipment receives Msg2, the user equipment sends an RRC connection establishment request message through the uplink resource allocated in the random access response message.

Step 204: eNB sends an RRC connection establishment message to the user equipment.

The eNB sends the RRC connection establishment message to the user equipment to establish SRB1, and allocates uplink resource used for the RRC connection establishment finish message for the user equipment.

Step 205: the user equipment sends an RRC connection establishment message to the eNB, and the message also carries data transmission control information.

The user equipment determines whether to send data through control plane signaling, according to the established SRB1 in the RRC connection establishment message, the allocated uplink resource, and the volume of to-be-transmitted data or the number of data packet. If the user equipment determines to send data through control plane signaling, it further determines whether to carry data transmission control information and data in the RRC connection establishment finish message to be sent to the eNB according to the size of the allocated uplink resource or the pre-negotiation between the user equipment and the eNB; and if it is determined not to make the RRC connection establishment finish message carry data, Step 205 is executed, and Step 206 is skipped to execute Step 207.

Step 206: the user equipment sends an RRC connection establishment message to the eNB, the message also carries data transmission control information and data.

The user equipment determines whether to send data through control plane signaling according to the established SRB1 in the RRC connection establishment message, the allocated uplink resource, the size of to-be-transmitted data volume or the number of data packet, If the user equipment determines to send data through control plane signaling, it further determines whether to carry data transmission control information and data in the RRC connection establishment finish message to be sent to the eNB according to the size of the allocated uplink resource or the pre-negotiation between the user equipment and the eNB; and if it is determined to make the RRC connection establishment finish message carry data and data transmission finish indication information, Step 206 is executed.

The detail of data transmission control information, the method for sending the data transmission finish indication information, and the method for sending the data transmission finish indication information are the same as those in the above-mentioned Example 1, which will not be described herein again.

Step 207: the eNB executes processing operation after receiving the data transmission control information, and determines whether the data transmission is finished. The corresponding processing operation includes:
the eNB determining whether the data receiving is finished;
starting a data transmission control timer (e.g., Tsmalldata);
buffering the received data; and
allocating the received data.

The method of the eNB determining whether data receiving is finished may be one of the following:
determining through the BSR, if the BSR indicates that no data is to be sent subsequently, it indicating that data transmission is finished, or else, indicating that data transmission is unfinished;
determining through data packet control information, if the number of transmission unfinished data packet is "0", it indicating data transmission is finished, or else, indicating data transmission is not finished; or
determining through data transmission finish indication information.

The above-mentioned data transmission control timer is used to control data transmission. If the timer expires, one of the following operations may be executed: the access network device sending to the core network device an S1 message carrying data, data indication information and data transmission finish indication information, and finishing the subsequent connection establishment process; or the access network device releasing the RRC connection of the user equipment, and indicating the reason of releasing RRC connection.

Step 208: the user equipment sends data and data transmission control information through RRC signaling, and the user equipment sends data and data transmission finish indication information to eNB through RRC signaling. The RRC signaling may be one of the following: an RRC connection establishment finish message; an up link information transfer message; and a new RRC message.

Step 209: the eNB executes processing operation after receiving the data transmission control information, and determines whether data transmission is finished.

A method of the eNB determining whether data receiving is finished may be one of the following:
determining through the BSR, if the BSR indicates that no data is to be sent subsequently, it indicating that data transmission is finished, or else, indicating that data transmission is unfinished;
determining through data packet control information, if the number of transmission unfinished data packet is "0", it indicating data transmission is finished, or else, indicating data transmission is not finished; or
determining through data transmission finish indication information.

If data receiving is finished, Step 210 is executed, if data receiving is unfinished, Step 208 and Step 209 continue to be executed until data receiving is finished or the data transmission control timer expires. In this Example, if the data transmission timer expires, Step 210 is executed.

Step 210: the eNB sends data, data indication information and data transmission finish indication information to an MME through an S1 message, and stops the data control timer.

The S1 message is as described in Example 1, which will not be described herein again.

In this Example, a method for sending the data indication information to the core network device may include adding data indication information to the S1 message for sending data. A method for sending the data transmission finish indication information to the core network device may include adding the data transmission finish indication information to the S1 message for sending data.

Step 211: the MME determines whether the user equipment can send data through control plane.

Determining whether the user equipment may employ a data optimization method to send data may be implemented by determining through the subscription information of the user equipment. In this Example, the user equipment may employ a data optimization method to send data.

Step 212: the MME sends the received data to a subsequent core network node.

Step 213: the MME determines to continue finishing a subsequent RRC connection process or release an RRC connection.

The MME determines to continue finishing a subsequent RRC connection process or release an RRC connection according to one of the following: according to user equipment subscription information; whether there is downlink data to be sent in a period of time after MME sends data to the subsequent node. In this Example, the MME will execute a process of releasing the RRC connection,

Step 214: the MME sends a UE context release command to the eNB.

The MME sends the UE context release command to the eNB to release a connection between the eNB and the MME.

Step 215: the eNB sends an RRC connection release message to the user equipment.

The eNB sends the RRC connection release message to the user equipment to release an RRC connection of the user equipment.

Step 216: the eNB sends a UE context release finish message to the MME.

The eNB sends the UE context release finish message to the MME to notify the MME that the connection is released.

### Example 3

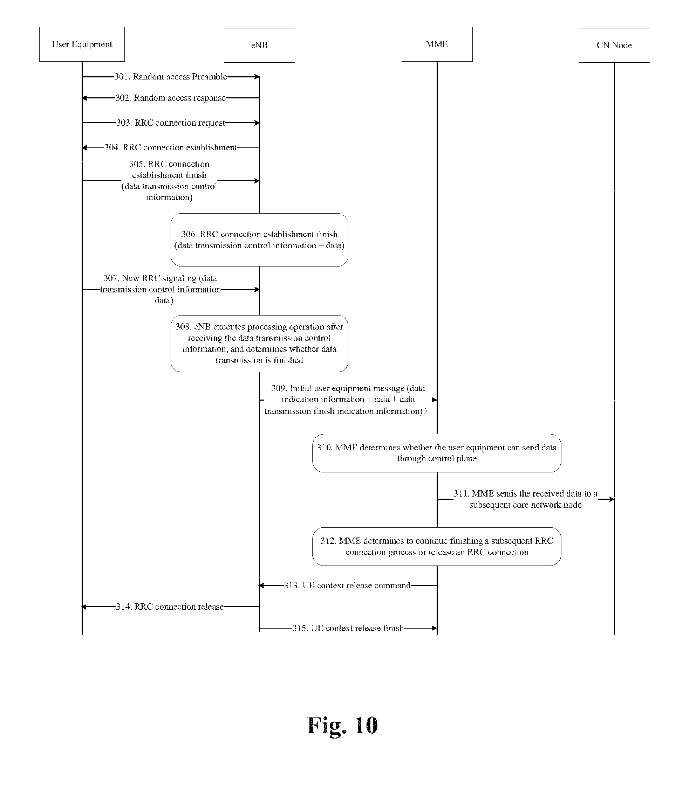

As shown in FIG. 10, a flowchart of a user equipment sending data through both of an RRC connection establishment finish message and a new RRC message, and an access network device sending data through an initial user equipment message and releasing an RRC connection after data transmission is finished; the specific process is as follows:
Step 301: user equipment sends a random access Preamble to an eNB.

When the user equipment or an MTC device has to-be-transmitted data, the user equipment or the MTC device firstly selects a Preamble, and sends the Preamble to the eNB according to random access resource information configured in a system.

Step 302: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 303: the user equipment sends an RRC connection request to the eNB.

After the user equipment receives Msg2, it sends an RRC connection establishment request message through the uplink resource allocated in the random access response message.

Step 304: the eNB sends an RRC connection establishment message to the user equipment.

The eNB sends the RRC connection establishment message to the user equipment to establish SRB1, and allocates uplink resource used for the RRC connection establishment finish message for the user equipment.

Step 305: the user equipment sends an RRC connection establishment message to the eNB, the message also carries data transmission control information. In this embodiment, according to the SRB1 established in the RRC connection establishment message and allocated uplink resource, the number of data packet to be sent by the user equipment is 1 and the size of data packet is 340 bytes. The user equipment determines to transmit data through control plane signaling according to the data volume and the number of data packet. The user equipment determines to carry data transmission control information and data in the RRC connection establishment finish message transmitted to the eNB according to the pre-negotiation between the user equipment and the eNB.

In this embodiment, the data is borne in a NAS PDU in the RRC connection establishment finish message. The data transmission control information includes: data indication information and BSR. The method for sending data indication information includes adding a new IE to the RRC connection establishment finish message, and adding the data indication information to the new IE. The BSR indicates that there are data which is not still transmitted by the user equipment completely.

Step 306: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines through the BSR that the BSR received by the eNB indicates that there are data to be sent subsequently, and then the eNB buffers the received data and continues waiting to receive the transmission unfinished data;

Step 307: the user equipment sends transmission unfinished data and data transmission control information through new RRC signaling.

In this embodiment, the data transmission control information is the BSR, and the BSR instructs the user equipment to finish data transmission. The new RRC message includes an RRC processing identity field and an NAS data specific information field. Of course, it also includes as required: a data transmission control information field, a non-critical extension field, etc., wherein the data transmission control information field may includes a data indication information field, a data transmission indication information finish field, a data packet control information field, a non-critical extension field, etc. In this embodiment, the transmission unfinished data is added to the NAS data specific information field.

Step 308: the eNB executes processing operation after receiving the data transmission control information, and determines whether data transmission is finished.

In this embodiment, the eNB determines through the BSR that the BSR received by eNB indicates that no data is to be sent subsequently.

Step 309: the eNB sends data, data indication information and data transmission finish indication information to the MME through an initial user equipment message, and stops the data control timer.

In this embodiment, the eNB determines that the user equipment finishes data transmission according to the Step 308 and generates data transmission finish indication information. The indication information having a value "1" indicates data transmission is finish for the user equipment. The eNB adds a data indication information IE and a data transmission finish indication information IE to the initial user equipment message for sending data, as shown in Table 1:

**Table 1**

| IE/Group Name (Name of Information Element /Group) | Presence | Range |
|---|---|---|
| Message Type | M (Must be Present) | |
| ...... | | |
| Data Indication | O (Selective Presence) | |
| Data Transmission Finish Indication | O (Selective Presence) | |

In this embodiment, the data transmission finish indication information has a value of "1", indicating that data transmission is finished, and the data indication information has a value of "1", indicating that there are data to be sent.

Step 310: MME determines whether the user equipment can send data through control plane.

In this example, it is determined through the subscription information that the user equipment may send data by a data optimization method.

Step 311: the MME sends the received data to a subsequent core network node.

Step 312: the MME determines to continue finishing a subsequent RRC connection process or release an RRC connection.

In this example, if no downlink data is to be sent in a period of time after the MME sends data to the subsequent core network node, it is determined to execute a process of releasing the RRC connection.

Step 313: the MME sends a UE context release command to the eNB.

The MME sends the UE context release command to the eNB to release a connection between eNB and MME.

Step 314: the eNB sends an RRC connection release message to the user equipment.

The eNB sends the RRC connection release message to the user equipment to release an RRC connection of the user equipment.

Step 315: the eNB sends a UE context release finish message to the MME.

The eNB sends the UE context release finish message to the MME to notify the MME that the connection is released.

### Example 4

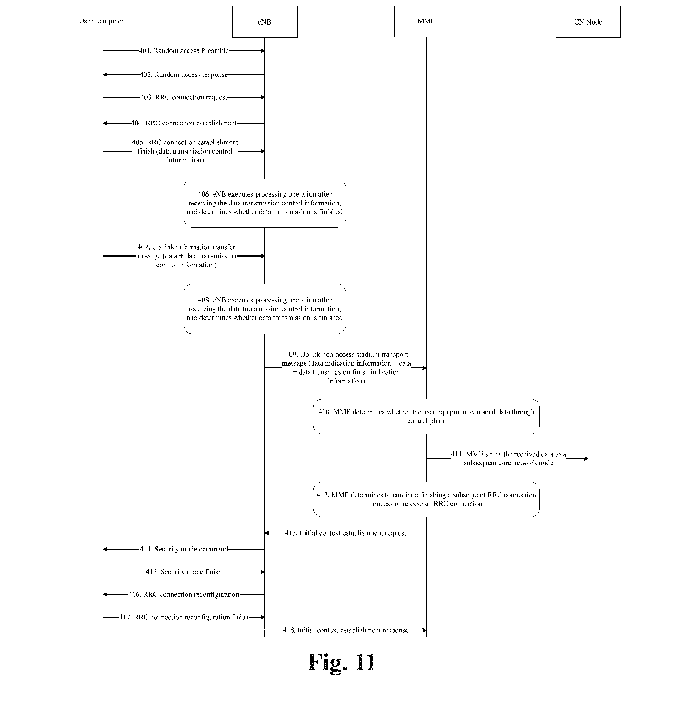

As shown in FIG. 11, a flowchart of user equipment sending data through both of an RRC connection establishment finish message and an up link information transfer message, and an access network device sending data through an uplink non-access stadium transport message and continuing finishing a subsequent connection establishment after data transmission is finished, the specific flow is as follows:
Step 401: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 402: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 403: the user equipment sends an RRC connection request to the eNB.

After the user equipment receives Msg2, the user equipment sends an RRC connection establishment request message through the uplink resource allocated in the random access response message.

Step 404: the eNB sends an RRC connection establishment message to the user equipment.

The eNB sends the RRC connection establishment message to the user equipment to establish SRB1, and allocates uplink resource used for the RRC connection establishment finish message for the user equipment.

Step 405: the user equipment sends an RRC connection establishment message to the eNB, and the message also carries data transmission control information and data.

In this embodiment, according to the SRB1 established in the RRC connection establishment message and allocated uplink resource, the number of data packet to be sent by the user equipment is 5, and the size of data packet is 700 bytes. The user equipment determines to transmit data through control plane signaling according to the data volume and the number of data packet. The user equipment determines to carry data transmission control information and data in the RRC connection establishment finish message according to the pre-negotiation between the user equipment and the eNB. In this embodiment, the data is borne in a NAS PDU in the RRC connection establishment finish message. The data transmission control information includes: data indication information and data transmission finish indication information. A method for sending the data indication information includes making the data indication information be borne in the new MAC CE. A method for sending the data transmission finish indication information includes making the data transmission finish indication information be borne in the new MAC CE.

A method for defining LCID (Logical Channel Identity) corresponding to the MAC CE carrying data transmission finish indication information is shown in an uplink share channel LCID table as shown in Table 2:

**Table 2**

| Number | LCID Value |
|---|---|
| 00000 | Common Control Channel |
| 00001-01010 | Logical Channel ID |
| 01011-10111 | Reserved Number |
| 01011 | Data Indication Information |
| 01100 | Data Transmission Finish Indication |
| 11001 | Extension Power Headroom Report |
| 11010 | Power Headroom Report |
| 11011 | Cell-Radio Network Temporary Identity |
| 11100 | Truncated Buffer Status Report |
| 11101 | Short Buffer Status Report |
| 11110 | Long Buffer Status Report |
| 11111 | Filling Information |

That is, two numbers are separated from the reserved numbers, one number (01100) is used to define the data transmission finish indication information, and the other number (01011) is used to define the data indication information. After the receiving terminal reads the LCID, it can be known that the corresponding MAC PDU has an MAC CE carrying data transmission finish indication information and data indication information, and then the data transmission finish indication information and data indication information in the MAC CE are read out.

In this embodiment, the data indication information has a value of "1", indicating that there are data to be sent, and the data transmission finish indication information has a value of "0", indicating that data transmission is unfinished.

Step 406: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines whether it is finished through the data transmission finish indication information. At this time, the received indication information has a value of "0", indicating that data receiving is unfinished, and the eNB buffers the received data and continues waiting to receive the transmission unfinished data.

Step 407: the user equipment continues sending the unfinished data and data transmission control information through an up link information transfer message.

In this embodiment, the method in Step 405 is used for the data transmission control information, i.e., making the data transmission finish indication information be borne in a new MAC CE, separating out a number (01100) from the reserved numbers according the corresponding relationships as shown in Table 2 to define the data transmission finish indication information. After the receiving terminal receives the LCID, it may be known that the corresponding MAC PDU has a MAC CE which carries the data transmission finish indication information, and then the data transmission finish indication information in the MAC CE is read out. In this embodiment, the data transmission finish indication information has a value of "1", indicating that data transmission is unfinished.

Step 408: the eNB executes processing operation after receiving the data transmission control information, and determines whether data transmission is finished.

In this embodiment, the data transmission finish indication information is used to determine whether data transmission is finished, The data transmission finish indication information received in Step 407 has a value "1", indicating that the user equipment finishes the data transmission and the eNB finishes data receiving.

Step 409: the eNB sends data, data indication information and data transmission finish indication information to the MME through an uplink non-access stadium transport message, and stops the data control timer;

In this embodiment, data indication information IE and data transmission finish indication information IE are added to the uplink non-access stadium transport message for sending data, as shown in Table 3:

**Table 3**

| IE/Group Name (Information Element/Group Name) | Presence | Range |
|---|---|---|
| Message Type | M | |
| ...... | | |
| Data Indication | O | |
| Data Transmission Finish Indication | O | |

In this embodiment, the data transmission finish indication information has a value of "1", indicating that data transmission is finished, and the data indication information has a value of "1", indicating that there is data to be sent.

Step 410: the MME determines whether the user equipment can send data through control plane.

In this example, it is determined through the subscription information that the user equipment may send data by a data optimization method.

Step 411: the MME sends the received data to a subsequent core network node.

Step 412: the MME determines to continue finishing a subsequent RRC connection process or release an RRC connection.

In this example, if there is downlink data to be sent in a period of time after MME sends data to the subsequent core network node, it is determined to execute a process of the subsequent RRC connection.

Step 413: the MME sends an initial context establishment request message to the eNB.

The MME notifies the eNB of connection information corresponding to the user equipment. The connection information includes access stratum security context information, switch limit information, QoS information, tunnel terminal identity and address information of service gate way used for user plane, etc.

Step 414: the eNB sends a security mode command message to the user equipment.

The eNB sends a security mode command to the user equipment or an MTC device to activate security of the user equipment.

Step 415: the user equipment sends a security mode finish message to the eNB.

The user equipment sends the security mode finish message to the eNB to notify the eNB that security is activated.

Step 416: the eNB sends RRC connection reconfiguration message to the user equipment.

The eNB sends the RRC connection reconfiguration message to the user equipment to establish DRB and SRB2 for the user equipment.

It should be noted that Step 416 may also be carried out before Step 415.

Step 417: the user equipment sends an RRC connection reconfiguration finish message to the eNB.

The user equipment sends the RRC connection reconfiguration finish message to the eNB to notify the eNB that data radio bearer and SRB2 configuration is finished.

Step 418: the eNB sends an initial context establishment response message to the MME.

The eNB sends the initial context establishment response message to the MME. The message carries tunnel terminal identity of the eNB and address information of the eNB for S 1 interface user plane downlink service.

### Example 5

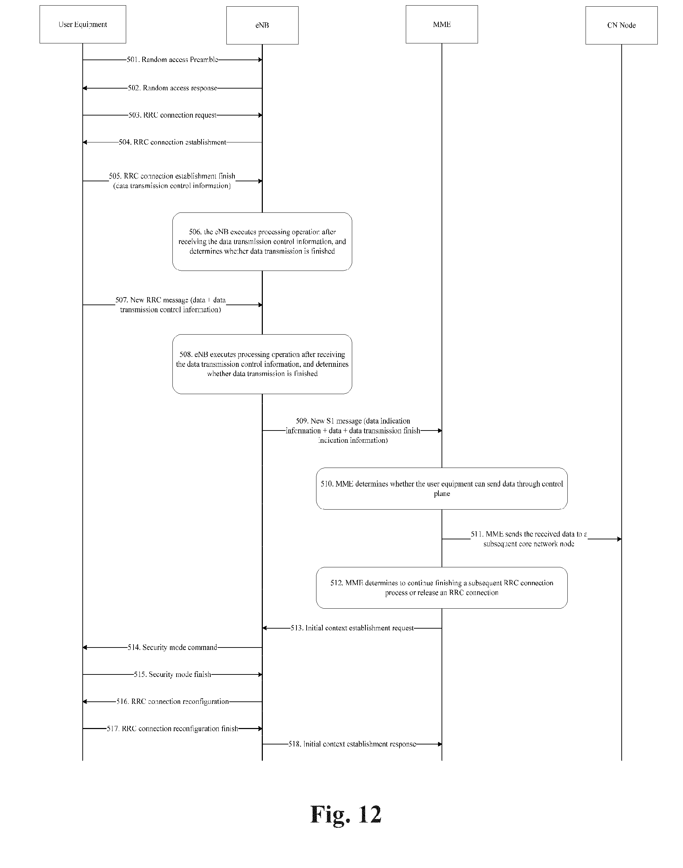

As shown in FIG. 12, a flowchart of user equipment sending data only through a new RRC message, and an access network device sending data through a new S1 message and continuing finishing a subsequent connection establishment after data transmission is finished, the specific flow is as follows:
Step 501: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 502: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 503: the user equipment sends an RRC connection request to the eNB.

After the user equipment receives Msg2, the user equipment sends an RRC connection establishment request message through the uplink resource allocated in the random access response message.

Step 504: the eNB sends an RRC connection establishment message to the user equipment.

The eNB sends the RRC connection establishment message to the user equipment to establish SRB 1, and allocates uplink resource for the RRC connection establishment finish message for the user equipment.

Step 505: the user equipment sends an RRC connection establishment message to the eNB, and the message only carries data transmission control information.

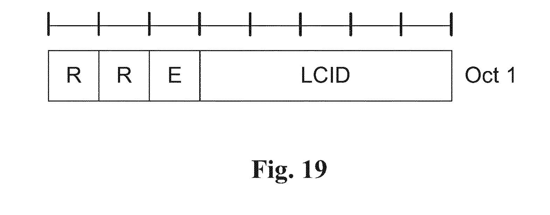

In this embodiment, according to SRB1 established in the RRC connection establishment message and allocated uplink resource, the number of data packet to be sent by the user equipment is 1, and the size of data packet is 400 bytes. The user equipment determines to transmit data through control plane signaling according to the data volume and the number of data packet. The user equipment determines to carry only data transmission control information in the RRC connection establishment finish message according to the pre-negotiation between the user equipment and the eNB. In this embodiment, the data is borne in a NAS PDU in the RRC connection establishment finish message. The data transmission control information includes: data indication information and BSR. A method for sending the data indication information includes making the data indication information be borne in a reserved bit in MAC subheader. A schematic diagram of bit allocation for the first byte in MAC subheader is as shown in FIG. 19. In FIG. 19, "R" indicates reserved bits in MAC subheader, and one of the reserved bits is set to be "1" to indicate the data indication information. After the receiving terminal reads the bit, it can be known that the corresponding MAC PDU has data indication information, and then the data indication information is read out. In this embodiment, the data indication information has a value of "1", indicating that there are data to be sent; and the BSR indicates that the user equipment still has transmission unfinished data.

Step 506: the eNB executes processing operation after receiving the data transmission control information, and determines whether data transmission is finished.

The eNB determines whether data receiving is finished, starts a data transmission control timer (e.g., Tsmalldata) and allocates resource for the data to be sent subsequently.

In this embodiment, the eNB determines through the BSR that the BSR received by the eNB indicates that there are data to be sent subsequently.

Step 507: the user equipment continues sending the unfinished data and data transmission control information through a new RRC message.

In this embodiment, the data transmission control information is the BSR, and the BSR instructs the user equipment to finish data transmission. The new RRC message includes an RRC processing identity field and an NAS data specific information field, and may also include: a data transmission control information field, a non-critical extension field, etc., wherein the data transmission control information field may includes a data indication information field, a data transmission indication information finish field, a data packet control information field, a non-critical extension field, etc. In this embodiment, the transmission unfinished data is added to the NAS data specific information field. Step 508: the eNB executes processing operation after receiving the data transmission control information, and determines whether data transmission is finished.

In this embodiment, the eNB determines through the BSR that the BSR received by eNB indicates that no data is to be sent subsequently.

Step 509: the eNB sends data, data indication information and data transmission finish indication information to the MME through a new S1 message, and stops the data control timer.

In this embodiment, the eNB determines that the user equipment finishes data transmission according to Step 508, and generates data transmission finish indication information. The indication information has a value "1" to indicate data transmission finish of the user equipment, the new S1 message for sending data is as shown in Table 4:

**Table 4**

| IE/Group Name (Information Element/Group Name) | Presence | Range |
|---|---|---|
| Message Type | M | |
| eNB UE S1AP ID (S1AP (Application Protocol) Identity of UE in eNB) | M | |
| NAS-PDU | M | |
| E-UTRAN CGI (Evolved Universal Terrestrial Radio Access Network Cell Global Identifier (CGI)) | M | |
| TAI (Tracking Area List) | M | |
| Data Indication | M | |
| Data Transmission Finish Indication | M | |
| GW Transport Layer Address (Gate Way (GW)Transport Layer Address) | O | |
| GUMMEI (Globally Unique Mobility Management Entity Identifier) | O | |
| Cell Access Mode | O | |
| Relay Node Indicator | O | |
| S-TMSI (System Architecture Evolution | O | |
| Temporary Mobile Subscriber Identity) | | |
| CSG ID (Closed Subscriber Group Identity) | O | |

In this embodiment, the data transmission finish indication information has a value of "1", indicating that data transmission is finished, and the data indication information has a value of "1", indicating that there are data to be sent. NAS PDU is used to send data.

Step 510: the MME determines whether the user equipment can send data through control plane.

In this example, it is determined through the subscription information that the user equipment may send data by a data optimization method.

Step 511: the MME sends the received data to a subsequent core network node.

Step 512: the MME determines to continue finishing a subsequent RRC connection process or release an RRC connection. In this example, if there is downlink data to be sent in a period of time after the MME sends data to the subsequent core network node, it is determined to execute a process of the subsequent RRC connection.

Step 513: the MME sends an initial context establishment request message to the eNB.

The MME notifies the eNB of connection information corresponding to the user equipment. The connection information includes access stratum security context information, switch limit information, QoS information, tunnel terminal identity and address information of service gate way for user plane, etc.

Step 514: the eNB sends a security mode command message to the user equipment.

The eNB sends a security mode command to the user equipment or an MTC device to activate security of the user equipment.

Step 515: the user equipment sends a security mode finish message to the eNB.

The user equipment sends the security mode finish message to the eNB to notify the eNB that security is activated.

Step 516: the eNB sends RRC connection reconfiguration message to the user equipment.

The eNB sends the RRC connection reconfiguration message to the user equipment to establish DRB and SRB2 for the user equipment.

It should be noted that Step 516 may also be carried out before Step 515.

Step 517: the user equipment sends an RRC connection reconfiguration finish message to the eNB.

The user equipment sends the RRC connection reconfiguration finish message to the eNB to notify the eNB that data radio bearer and SRB2 configuration is finished.

Step 518: the eNB sends an initial context establishment response message to the MME.

The eNB sends the initial context establishment response message to the MME. The message carries tunnel terminal identity of the eNB and address information of the eNB for S1 interface user plane downlink service.

### Example 6

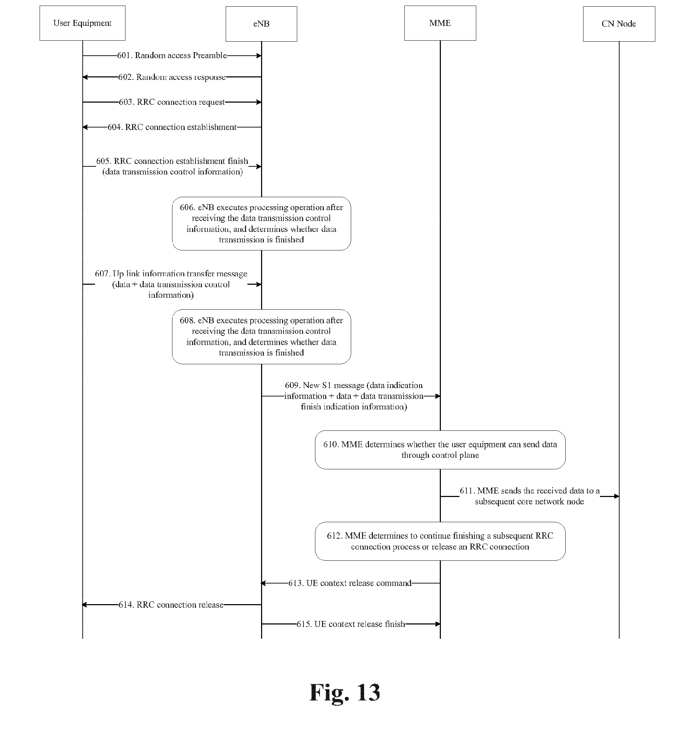

As shown in FIG. 13, a flowchart of user equipment sending data only through an up link information transfer message, and an access network device sending data through a new S1 message and releasing an RRC connection after data transmission is finished, the specific flow is as follows:
Step 601: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 602: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 603: the user equipment sends an RRC connection request to the eNB.

After the user equipment receives Msg2, the user equipment sends an RRC connection establishment request message through the uplink resource allocated in the random access response message.

Step 604: the eNB sends an RRC connection establishment message to the user equipment.

The eNB sends the RRC connection establishment message to the user equipment to establish SRB1, and allocates uplink resource used for the RRC connection establishment finish message for the user equipment.

Step 605: the user equipment sends an RRC connection establishment message to the eNB, and the message only carries data transmission control information.

In this embodiment, according to SRB1 established in the RRC connection establishment message and allocated uplink resource, the number of data packet to be sent by the user equipment is 3, and the size of data packet is 500 bytes. The user equipment determines to transmit data through control plane signaling according to the data volume and the number of data packet. The user equipment determines to carry data transmission control information in the RRC connection establishment finish message transmitted to the eNB according to the pre-negotiation between the user equipment and eNB.

In this embodiment, the data are borne in a NAS PDU in the RRC connection establishment finish message. The data transmission control information including: data indication information and data transmission finish indication information. In this embodiment, a method for sending the data indication information includes adding a new IE to the RRC connection establishment finish message, and adding the data indication information to the new IE. In this embodiment, a method for sending the data transmission finish indication information includes making the data transmission finish indication information be borne in a new MAC CE.

A method for defining LCID corresponding to the MAC CE carrying data transmission finish indication information is shown in an uplink share channel LCID table as shown in Table 5:

**Table 5**

| Number | LCID Value |
|---|---|
| 00000 | Common Control Channel |
| 00001-01010 | Logical Channel ID |
| 01011-10111 | Reserved Number |
| 01011 | Data Transmission Finish Indication |
| 11001 | Extension Power Headroom Report |
| 11010 | Power Headroom Report |
| 11011 | Cell-Radio Network Temporary Identity |
| 11100 | Truncated Buffer Status Report |
| 11101 | Short Buffer Status Report |
| 11110 | Long Buffer Status Report |
| 11111 | Filling Information |

That is, a number (01011) is separated from the reserved numbers to define the data transmission finish indication information. After the receiving terminal reads the LCID, it can be known that the corresponding MAC PDU has a MAC CE carrying data transmission finish indication information, and then the data transmission finish indication information in the MAC CE is read out. In this embodiment, the data indication information has a value of "1", indicating that there is data to be sent, and the data transmission finish indication information has a value of "0", indicating that data transmission is unfinished.

Step 606: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines through the data transmission finish indication information that the data transmission finish indication information received by the eNB has a value of "0", indicating that there is data to be sent subsequently, and then the eNB buffers the received data and continues waiting to receive the transmission unfinished data:
Step 607: the user equipment sends data and data transmission control information through an up link information transfer message.

In this embodiment, the data transmission control information is data transmission finish indication information, which is used the same as the application rule in Step 605. In this Step, the data transmission finish indication information has a value of "1", indicating that data transmission is finished.

Step 608: the eNB executes processing operation after receiving the data transmission control information, and determines whether data transmission is finished.

In this embodiment, the eNB determines through the data transmission finish indication information that the data transmission finish indication information received by eNB has a value of "1", indicating that no data is to be sent subsequently.

Step 609: the eNB sends data, data indication information and data transmission finish indication information to the MME through a new S1 message, and stops the data control timer.

In this embodiment, the new S1 message for sending data is as shown in Table 6:

**Table 6**

| IE/Group Name (Information Element/Group Name) | Presence | Range |
|---|---|---|
| Message Type | M | |
| eNB UE S1AP ID (S1AP (Application Protocol) Identity of UE in eNB) | M | |
| NAS-PDU | M | |
| E-UTRAN CGI (Evolved Universal Terrestrial Radio Access Network Cell Global Identifier(CGI)) | M | |
| TAI (Tracking Area List) | M | |
| Data Indication | M | |
| Data Transmission Finish Indication | M | |
| GW Transport Layer Address (Gate Way (GW)Transport Layer Address) | O | |
| GUMMEI (Globally Unique Mobility Management Entity Identifier) | O | |
| Cell Access Mode | O | |
| Relay Node Indicator | O | |
| S-TMSI (System Architecture Evolution Temporary Mobile Subscriber Identity) | O | |
| CSG ID (Closed Subscriber Group Identity) | O | |

In this embodiment, the data transmission finish indication information has a value of "1", indicating that data transmission is finished, and the data indication information has a value of "1", indicating that there is data to be sent.

Step 610: the MME determines whether the user equipment can send data through control plane.

In this example, it is determined through the subscription information that the user equipment may send data by a data optimization method.

Step 611: the MME sends the received data to a subsequent core network node.

Step 612: the MME determines to continue finishing a subsequent RRC connection process or release an RRC connection. In this example, if no downlink data is to be sent in a period of time after the MME sends data to the subsequent core network node, it is determined to execute the process of releasing the RRC connection.

Step 613: the MME sends a UE context release command to the eNB.

The MME sends the UE context release command to the eNB to release a connection between the eNB and the MME.

Step 614: the eNB sends an RRC connection release message to the user equipment.

The eNB sends the RRC connection release message to the user equipment to release the RRC connection of the user equipment.

Step 615: the eNB sends a UE context release finish message to the MME.

The eNB sends the UE context release finish message to the MME to notify the MME that the connection is released.

### Example 7

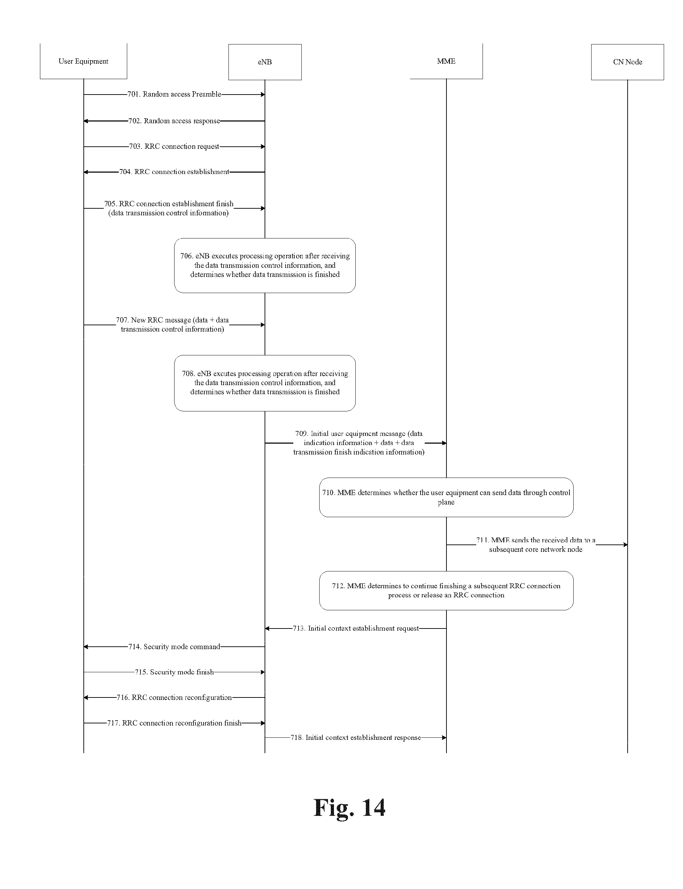

As shown in FIG. 14, a flowchart of user equipment sending data only through a new RRC message, and an access network device sending data through an initial user equipment message and continuing finishing a subsequent connection establishment after data transmission is finished, the specific flow is as follows:
Step 701: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 702: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 703: the user equipment sends an RRC connection request to the eNB.

After the user equipment receives Msg2, the user equipment sends an RRC connection establishment request message through the uplink resource allocated in the random access response message.

Step 704: the eNB sends an RRC connection establishment message to the user equipment.

The eNB sends the RRC connection establishment message to the user equipment to establish SRB1, and allocates uplink resource used for the RRC connection establishment finish message for the user equipment.

Step 705: the user equipment sends an RRC connection establishment message to the eNB, and the message only carries data transmission control information.

In this embodiment, according to SRB1 established in the RRC connection establishment message and allocated uplink resource, the number of data packet to be sent by the user equipment is 10. The user equipment determines to transmit data through control plane signaling according to the data volume, and the user equipment determines to only carry data transmission control information in the RRC connection establishment finish message transmitted to the eNB according to the pre-negotiation between the user equipment and the eNB.

In this embodiment, the data is borne in a NAS PDU in the RRC connection establishment finish message. The data transmission control information includes: data indication information and data packet control information. A method for sending data indication information includes adding a new IE to the RRC connection establishment finish message, and adding the data indication information to the new IE. In this Step, the data indication information has a value of "1", indicating that there is data to be sent, and the data packet control information has a value not equal to "0", indicating data transmission is unfinished.

Step 706: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines whether it is finished through the data packet control information, and then the received indication information has a value not equal to "0", indicating that data receiving is unfinished; and the eNB continues waiting to receive the transmission unfinished data.

Step 707: the user equipment continues sending the unfinished data and data transmission control information through a new RRC message.

In this embodiment, data transmission control information is data packet control information. In this Step, the data packet control information has a value of "0", indicating that data receiving is finished. The new RRC message includes an RRC processing identity field and an NAS data specific information field, and may also include: a data transmission control information field, a non-critical extension field, etc., wherein the data transmission control information field may include a data indication information field, a data transmission indication information finish field, a data packet control information field and a non-critical extension field, etc. In this embodiment, the transmission unfinished data is added to the NAS data specific information field and the data packet control information is added to the data packet control information field.

Step 708: the eNB excutes processing operation after receiving the data transmission control information, and determines whether data transmission is finished.

In this embodiment, the data packet control information is used to determine whether data transmission is finished. The data packet control information received in Step 707 has a value of "0", indicating that the user equipment finishes data transmission. The eNB finishes data receiving.

Step 709: the eNB sends data, data indication information and data transmission finish indication information to the MME through an initial user equipment message, and stops the data control timer.

In this embodiment, the eNB determines that the user equipment finishes data transmission according to Step 708 and generates data transmission finish indication information. The indication information has a value "1" to indicate data transmission is finished for the user equipment. The eNB adds a data indication information IE and a data transmission finish indication information IE to the initial user equipment message for sending data, as shown in Table 7:

**Table 7**

| IE/Group Name (Information Element/Group Name) | Presence | Range |
|---|---|---|
| Message Type | M | |
| ...... | | |
| Data Indication | O | |
| Data Transmission Finish Indication | O | |

In this embodiment, the data transmission finish indication information has a value of "1", indicating that data transmission is finished, and the data indication information has a value of "1", indicating that there are data to be sent.

Step 710: the MME determines whether the user equipment can send data through control plane.

In this example, it is determined through the subscription information that the user equipment may send data by a data optimization method.

Step 711: the MME sends the received data to a subsequent core network node.

Step 712: the MME determines to continue finishing a subsequent RRC connection process or release an RRC connection.

In this example, if there is downlink data to be sent in a period of time after the MME sends data to the subsequent core network node, it is determined to execute a process of the subsequent RRC connection.

Step 713: the MME sends an initial context establishment request message to the eNB.

The MME notifies the eNB of connection information corresponding to the user equipment. The connection information includes access stratum security context information, switch limit information, QoS information, tunnel terminal identity and address information of service gate way for user plane, etc.

Step 714: the eNB sends a security mode command message to the user equipment.

The eNB sends a security mode command to the user equipment or an MTC device to activate security of the user equipment.

Step 715: the user equipment sends a security mode finish message to the eNB.

The user equipment sends the security mode finish message to the eNB to notify the eNB that security is activated.

Step 716: the eNB sends an RRC connection reconfiguration message to the user equipment.

The eNB sends the RRC connection reconfiguration message to the user equipment to establish DRB and SRB2 for the user equipment.

It should be noted that Step 716 may also be carried out before Step 715.

Step 717: the user equipment sends an RRC connection reconfiguration finish message to the eNB.

The user equipment sends the RRC connection reconfiguration finish message to the eNB to notify the eNB that data radio bearer and SRB2 configuration is finished.

Step 718: the eNB sends an initial context establishment response message to the MME.

The eNB sends the initial context establishment response message to the MME. The message carries tunnel terminal identity of the eNB and address information of the eNB for S1 interface user plane downlink service.

### Example 8

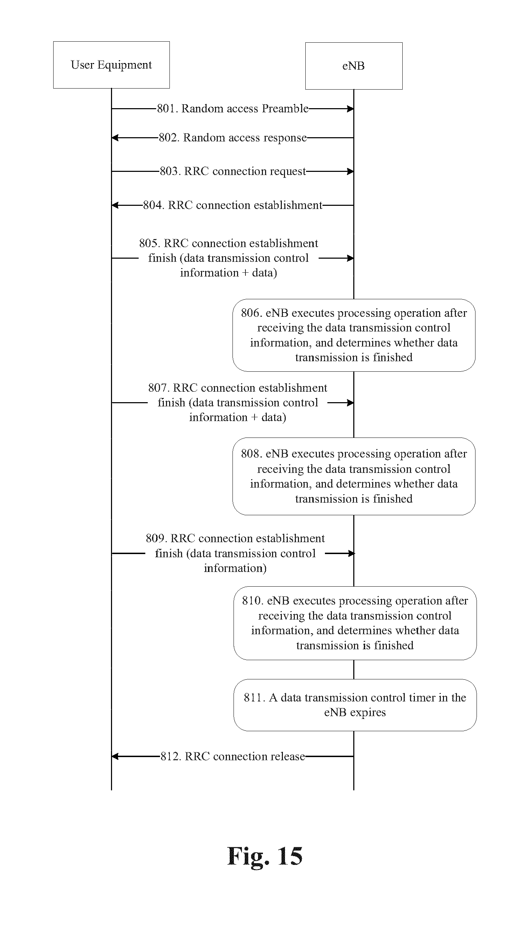

As shown in FIG. 15, a flowchart of user equipment sending data only through an RRC connection establishment finish message, and eNB starting an RRC connection release process because a data control timer in the eNB is time-out, the specific flow is as follows:
Step 801: user equipment sends random access Preamble to the eNB.

When the user equipment or an MTC device has to-be-transmitted data, the user equipment or the MTC device firstly selects a Preamble, and sends the Preamble to the eNB according to random access resource information configured in a system.

Step 802: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 803: the user equipment sends an RRC connection request to the eNB.

After the user equipment receives Msg2, the user equipment sends an RRC connection establishment request message through the uplink resource allocated in the random access response message.

Step 804: the eNB sends an RRC connection establishment message to the user equipment.

The eNB sends the RRC connection establishment message to the user equipment to establish SRB1, and allocates uplink resource used for the RRC connection establishment finish message for the user equipment.

Step 805: the user equipment sends an RRC connection establishment message to the eNB, and the message also carries data transmission control information. In this embodiment, according to the SRB1 established in the RRC connection establishment message and allocated uplink resource, the data volume to be sent by the user equipment is 400 bytes. The user equipment determines to transmit data through control plane signaling according to the data volume, and the user equipment determines to carry data transmission control information and data in the RRC connection establishment finish message transmitted to the eNB according to the pre-negotiation between the user equipment and the eNB.

In this embodiment, the data is borne in an NAS PDU in RRC connection establishment finish message. The data transmission control information includes: data indication information and data transmission finish indication information. In this embodiment, a method for sending the data indication information includes making the data indication information be borne in a new MAC CE.

In this embodiment, a method for sending the data transmission finish indication information includes making the data indication information be borne in reserved bits in MAC subheader. As shown in FIG. 19, in FIG. 19, "R" indicates reserved bits in MAC subheader, and one of the reserved bits is set to be "1" to indicate the data indication information. After the receiving terminal reads the bit, it can be known that the corresponding MAC PDU has data transmission finish indication information, and then data transmission finish indication information is read out. In this Step, the data transmission finish indication information has a value of "0", indicating that data transmission is unfinished.

A method for defining LCID corresponding to the MAC CE carrying data transmission finish indication information is shown in an uplink share channel LCID table as shown in Table 8:

**Table 8**

| Number | LCID Value |
|---|---|
| 00000 | Common Control Channel |
| 00001-01010 | Logical Channel ID |
| 01011-10111 | Reserved Number |
| 01011 | Data Indication Information |
| 11001 | Extension Power Headroom Report |
| 11010 | Power Headroom Report |
| 11011 | Cell-Radio Network Temporary Identity |
| 11100 | Truncated Buffer Status Report |
| 11101 | Short Buffer Status Report |
| 11110 | Long Buffer Status Report |
| 11111 | Filling Information |

That is, a number (01011) is separated from the reserved numbers to define the data indication information. After the receiving terminal reads the LCID, it can be known that the corresponding MAC PDU has a MAC CE carrying data indication information, and then the data indication information in the MAC CE is read out. In this embodiment, the data indication information has a value of "1", indicating that there is data to be sent.

Step 806: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines through the data transmission finish indication information. At this time, the received data transmission finish indication information has a value of "0", indicating that data receiving is unfinished; and the eNB buffers the received data and continues waiting to receive the transmission unfinished data.

Step 807: the user equipment continues sending unfinished data and data transmission control information through the RRC connection establishment finish message.

In this embodiment, the data transmission control information is data transmission finish indication information; and the data indication information is borne in reserved bits in MAC subheader, the specific method is the same as that in Step 805. In this Step, the data transmission finish indication information has a value of "0", indicating that data transmission is unfinished.

Step 808: the eNB executes processing operation after receiving the data transmission control information, and determines whether data transmission is finished. In this embodiment, the eNB determines through the data transmission finish indication information, and at this time, the received data transmission finish indication information has a value of "0", indicating that data receiving is unfinished; and the eNB buffers the received data and continues waiting to receive the transmission unfinished data.

Step 809: the unfinished data and data transmission control information continue to be transmitted through the RRC connection establishment finish message.

In this embodiment, the data transmission control information is data transmission finish indication information; and the data indication information is borne in reserved bits in MAC subheader, the specific method is the same as that in Step 805. In this Step, the data transmission finish indication information has a value of "0", indicating that data transmission is unfinished.

Step 810: the eNB executes processing operation after receiving the data transmission control information, and determines whether data transmission is finished.

In this embodiment, the eNB determines through the data transmission finish indication information, and at this time, the received data transmission finish indication information has a value of "0", indicating that data receiving is unfinished, The eNB buffers the received data and continues waiting to receive the transmission unfinished data.

Step 811: a data transmission control timer in the eNB expires.

In this embodiment, after Step 810, the data transmission control timer in the eNB expires, eNB determines to release the RRC connection.

Step 812: the eNB sends an RRC connection release message to the user equipment.

In this embodiment, the eNB sends the RRC connection release message to the user equipment, indicates the reason of releasing the RRC connection for the user equipment (e.g., the data transmission control timer expires or other reasons) and discards the received data transmitted from the UE.

### Example 9

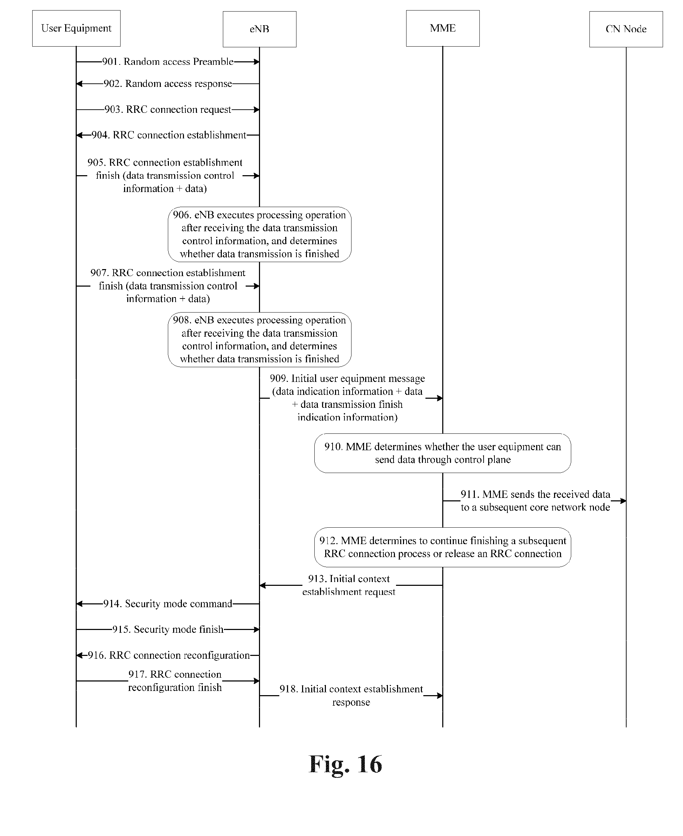

As shown in FIG. 16, a flowchart of user equipment sending data only through an RRC connection establishment finish message, and an access network device sending data through an initial user equipment message and continuing finishing a subsequent connection establishment after data transmission is finished, the specific flow is as follows:
Step 901: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 902: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 903: the user equipment sends an RRC connection request to the eNB.

After the user equipment receives Msg2, the user equipment sends an RRC connection establishment request message through the uplink resource allocated in the random access response message.

Step 904: the eNB sends an RRC connection establishment message to the user equipment.

The eNB sends the RRC connection establishment message to the user equipment to establish SRB 1, and allocates uplink resource for the RRC connection establishment finish message for the user equipment.

Step 905: the user equipment sends an RRC connection establishment message to the eNB, and the message also carries data transmission control information and data.

In this embodiment, according to SRB1 established in the RRC connection establishment message and allocated uplink resource, the number of data packet to be sent by the user equipment is 4. The user equipment determines to transmit data through control plane signaling according to the data volume, and the user equipment determines to carry data transmission control information and data in the RRC connection establishment finish message transmitted to the eNB according to the pre-negotiation between the user equipment and the eNB.

In this embodiment, the data is borne in a NAS PDU in the RRC connection establishment finish message. The data transmission control information includes: data indication information and data transmission finish indication information. In this embodiment, a method for sending the data indication information includes making the data indication information be borne in the new MAC CE; and a method for sending the data transmission finish indication information includes making the data transmission finish indication information be borne in the new MAC CE.

A method for defining LCID corresponding to the MAC CE carrying data transmission finish indication information is shown in an uplink share channel LCID table as shown in Table 9:

**Table 9**

| Number | LCID Value |
|---|---|
| 00000 | Common Control Channel |
| 00001-01010 | Logical Channel ID |
| 01011-10111 | Reserved Number |
| 01011 | Data Indication Information |
| 01100 | Data Transmission Finish Indication |
| 11001 | Extension Power Headroom Report |
| 11010 | Power Headroom Report |
| 11011 | Cell-Radio Network Temporary Identity |
| 11100 | Truncated Buffer Status Report |
| 11101 | Short Buffer Status Report |
| 11110 | Long Buffer Status Report |
| 11111 | Filling Information |

That is, two numbers are separated from the reserved numbers, one number (01100) is used to define the data transmission finish indication information, and the other number (01011) is used to define the data indication information. After the receiving terminal reads the LCID, it can be known that the corresponding MAC PDU has a MAC CE carrying data transmission finish indication information and data indication information, and then the data transmission finish indication information and data indication information in the MAC CE are read out. In this embodiment, the data indication information has a value of "1", indicating that there are data to be sent, and the data transmission finish indication information has a value of "0", indicating that data transmission is unfinished.

Step 906: the eNB executes processing operation after receiving the data transmission control information, and determines whether data transmission is finished.

The eNB determines whether the data receiving is finished, starts a data transmission control timer (e.g., Tsmalldata), and allocates resource for the data to be sent subsequently.

In this embodiment, the data transmission finish indication information is used to determine whether data transmission is finished. The data transmission finish indication information received in Step 907 has a value of "0", indicating that the user equipment has not finished the data transmission, and then the eNB buffers the received data and continues waiting to receive the transmission unfinished data.

Step 907: the user equipment continues sending unfinished data and data transmission control information through the RRC connection establishment finish message.

In this embodiment, the data transmission control information is data transmission finish indication information, and the method in Step 905 is used for the information, i.e., making the data transmission finish indication information be borne in a new MAC CE, separating out a number (01100) from the reserved numbers according the corresponding relationships as shown in Table 9 to define the data transmission finish indication information. After the receiving terminal receives the LCID, it may be known that the corresponding MAC PDU has a MAC CE which carries the data transmission finish indication information, and then the data transmission finish indication information in the MAC CE is read out. In this embodiment, the data transmission finish indication information has a value of "1", indicating that data transmission is unfinished.

Step 908: the eNB executes processing operation after receiving the data transmission control information, and determines whether data transmission is finished.

In this embodiment, the data transmission finish indication information is used to determine whether data transmission is finished, and the data transmission finish indication information received in Step 907 has a value "1", indicating that the user equipment finishes the data transmission and the eNB finishes data receiving.

Step 909: the eNB sends data, data indication information and data transmission finish indication information to the MME through an initial user equipment message, and stops the data control timer.

In this embodiment, data indication information IE and data transmission finish indication information IE are added to the initial user equipment message for sending data, as shown in Table 10:

**Table 10**

| IE/Group Name (Information Element/Group Name) | Presence | Range |
|---|---|---|
| Message Type | M | |
| | | |
| Data Indication | O | |
| Data Transmission Finish Indication | O | |

In this embodiment, the data transmission finish indication information has a value of "1", indicating that data transmission is finished, and the data indication information has a value of "1", indicating that there is data to be sent.

Step 910: the MME determines whether the user equipment can send data through control plane.

In this example, it is determined through the subscription information that the user equipment may send data by a data optimization method. Step 911: the MME sends the received data to a subsequent core network node.

Step 912: the MME determines to continue finishing a subsequent RRC connection process or release an RRC connection.

In this example, if there is downlink data to be sent in a period of time after the MME sends data to the subsequent core network node, it is determined to execute a process of the subsequent RRC connection.

Step 913: the MME sends an initial context establishment request message to the eNB.

The MME notifies the eNB of connection information corresponding to the user equipment. The connection information included access stratum security context information, switch limit information, QoS information, tunnel terminal identity and address information of service gate way for user plane, etc.

Step 914: the eNB sends a security mode command message to the user equipment.

The eNB sends a security mode command to the user equipment or an MTC device to activate security of the user equipment.

Step 915: the user equipment sends a security mode finish message to the eNB.

The user equipment sends the security mode finish message to the eNB to notify the eNB that security is activated.

Step 916: the eNB sends an RRC connection reconfiguration message to the user equipment.

The eNB sends the RRC connection reconfiguration message to the user equipment to establish DRB and SRB2 for the user equipment.

It should be noted that Step 916 may also be carried out before Step 915.

Step 917: the user equipment sends an RRC connection reconfiguration finish message to the eNB.

The user equipment sends the RRC connection reconfiguration finish message to the eNB to notify the eNB that data radio bearer and SRB2 configuration is finished.

Step 918: the eNB sends an initial context establishment response message to the MME.

The eNB sends the initial context establishment response message to the MME, the message carrying tunnel terminal identity of the eNB and address information of the eNB for S1 interface user plane downlink service.

### Example 10

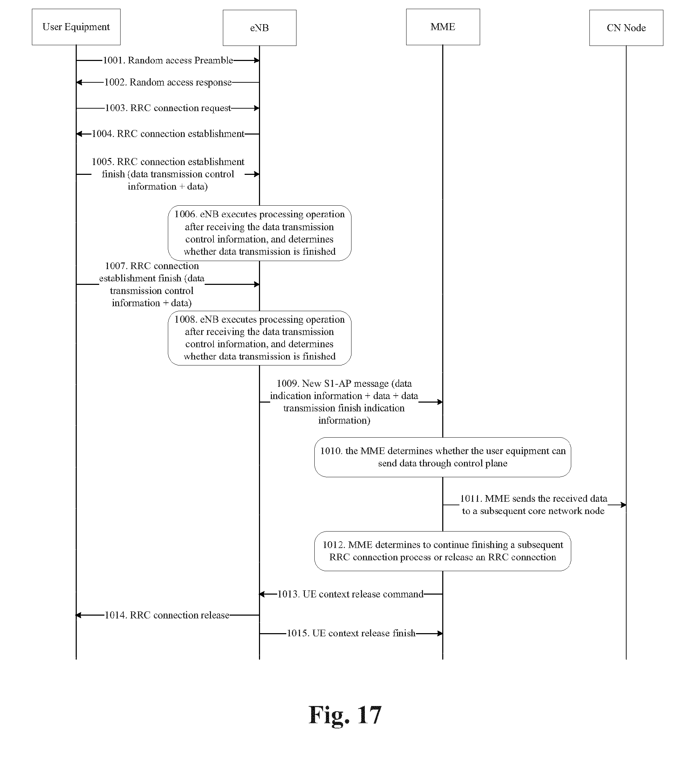

As shown in FIG. 17, a flowchart of user equipment sending data only through an RRC connection establishment finish message, and an access network device sending data using a new S1 message and releasing RRC connection after data transmission is finished, the specific flow is as follows:
Step 1001: user equipment sends random access Preamble to an eNB.

When the user equipment or an MTC device has to-be-transmitted data, the user equipment or the MTC device firstly selects a Preamble, and sends the Preamble to the eNB according to random access resource information configured in a system.

Step 1002: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 1003: the user equipment sends an RRC connection request to the eNB.

After the user equipment receives Msg2, the user equipment sends an RRC connection establishment request message through the uplink resource allocated in the random access response message.

Step 1004: the eNB sends an RRC connection establishment message to the user equipment.

The eNB sends the RRC connection establishment message to the user equipment to establish SRB1, and allocates uplink resource used for the RRC connection establishment finish message for the user equipment.

Step 1005: the user equipment sends an RRC connection establishment message to the eNB, and the message also carries data transmission control information and data.

In this embodiment, according to the SRB1 established in the RRC connection establishment message and allocated uplink resource, the number of data packet to be sent by the user equipment is 1, and the size of data packet is 500 bytes. The user equipment determines to transmit data through control plane signaling according to the data volume and the number of data packet and the user equipment determines to carry data transmission control information in the RRC connection establishment finish message transmitted to the eNB according to the pre-negotiation between the user equipment and the eNB.

In this embodiment, the data is borne in a NAS PDU in the RRC connection establishment finish message. The data transmission control information includes: data indication information and data transmission finish indication information. In this embodiment, the method for sending data indication information includes making the data indication information is borne in reserved bits in MAC subheader. As shown in FIG. 19, in FIG. 19, "R" indicates reserved bits in the MAC subheader, and one of the reserved bits "1" indicates the data indication information. After the receiving terminal reads the bit, it can be known that the corresponding MAC PDU has data indication information, and then the data indication information is read out.

In this embodiment, a method for sending the data transmission finish indication information includes making the data indication information be borne in reserved bits in the MAC subheader. As shown in FIG. 19, in FIG. 19, "R" indicates reserved bits in the MAC subheader, one of the reserved bits "1" indicates the data indication information, and this reserved bit should not conflict with the reserved bit used in the data indication information. After the receiving terminal reads the bit, it can be known that the corresponding MAC PDU has data transmission finish indication information, and then data transmission finish indication information is read out. In this embodiment, the data indication information has a value of "1", indicating that there are data to be sent, and the data transmission finish indication information has a value of "0", indicating that data transmission is unfinished.

Step 1006: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines whether it is finished through the data transmission finish indication information. At this time, the received indication information has a value of "0", indicating that data receiving is unfinished, and the eNB buffers the received data and continues waiting to receive the transmission unfinished data.

Step 1007: the user equipment sends data and data transmission control information through the RRC connection establishment finish message.

In this embodiment, the data transmission control information is data transmission finish indication information; and the data indication information is borne in reserved bits in MAC subheader, the specific method is the same as that in Step 1005. In this Step, the data transmission finish indication information has a value of "1", indicating that data transmission is finished.

Step 1008: the eNB executes processing operation after receiving the data transmission control information, and determines whether data transmission is finished.

In this embodiment, the eNB determines whether it is finished through the data transmission finish indication information. At this time, the received indication information has a value of "1", indicating that data receiving is finished. The eNB finishes data receiving.

Step 1009: the eNB sends data, data indication information and data transmission finish indication information to the MME through a new S1 message, and stops the data control timer.

In this embodiment, the new S1 message for sending data is as shown in Table 11:

**Table 11**

| IE/Group Name (Information Element/Group Name) | Presence | Range |
|---|---|---|
| Message Type | M | |
| eNB UE S1AP ID (S1AP (Application Protocol) Identity of UE in eNB) | M | |
| NAS-PDU | M | |
| E-UTRAN CGI (Evolved Universal Terrestrial Radio Access Network Cell Global Identifier(CGI)) | M | |
| TAI (Tracking Area List) | M | |
| Data Indication | M | |
| Data Transmission Finish Indication | M | |
| GW Transport Layer Address (Gate Way (GW) Transport Layer Address) | O | |
| GUMMEI (Globally Unique Mobility Management Entity Identifier Identifier | O | |
| Cell Access Mode | O | |
| Relay Node Indicator | O | |

In this embodiment, the data transmission finish indication information has a value of "1", indicating that data transmission is finished, and the data indication information has a value of "1", indicating that there are data to be sent.

Step 1010: the MME determines whether the user equipment can send data through control plane. In this example, it is determined through the subscription information that the user equipment may send data by a data optimization method.

Step 1011: the MME sends the received data to a subsequent core network node.

Step 1012: the MME determines to continue finishing a subsequent RRC connection process or release an RRC connection.

In this example, the MME determines to execute a process of releasing the RRC connection after finishing data transmission according to the subscription information of the user equipment.

Step 1013: the MME sends a UE context release command to the eNB.

The MME sends the UE context release command to the eNB to release a connection between the eNB and the MME.

Step 1014: the eNB sends an RRC connection release message to the user equipment.

The eNB sends the RRC connection release message to the user equipment to release the RRC connection of the user equipment.

Step 1015: the eNB sends a UE context release finish message to the MME.

The eNB sends the UE context release finish message to the MME to notify the MME that the connection is released.

### Example 11

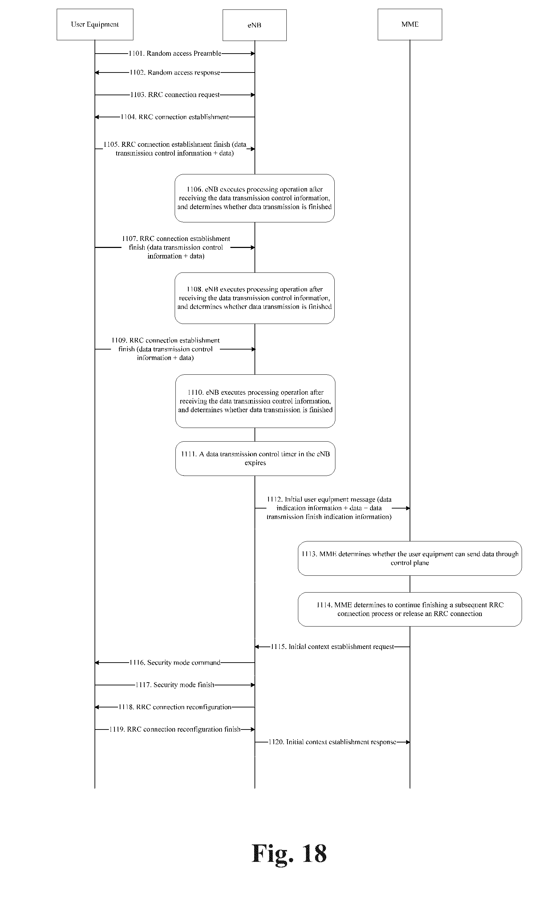

As shown in FIG. 18, a flowchart of user equipment sending data only through an RRC connection establishment finish message, and the eNB continues executing a subsequent RRC connection establishment process when a data control timer in the eNB is time-out, the specific flow is as follows:
Step 1101: the user equipment sends a random access Preamble to the eNB.

When the user equipment or an MTC device has to-be-transmitted data, the user equipment or the MTC device firstly selects a Preamble, and sends the Preamble to the eNB according to random access resource information configured in a system.

Step 1102: the eNB sends a random access response message (Msg2) to the user equipment.

The random access response message may include: Preamble identity corresponding to the random access Preamble transmitted by user equipment, uplink transmission timing adjustment, uplink resource allocation for an RRC connection request message, temporary C-RNTI, etc.

Step 1103: the user equipment sends an RRC connection request to the eNB.

After the user equipment receives Msg2, the user equipment sends an RRC connection establishment request message through the uplink resource allocated in the random access response message.

Step 1104: the eNB sends an RRC connection establishment message to the user equipment.

The eNB sends the RRC connection establishment message to the user equipment to establish SRB1, and allocates uplink resource used for the RRC connection establishment finish message for the user equipment.

Step 1105: the user equipment sends an RRC connection establishment message to the eNB, and the message also carries data transmission control information and data.

In this embodiment, according to the SRB1 established in the RRC connection establishment message and allocated uplink resource, the data volume to be sent by the user equipment is 610 bytes. The user equipment determines to transmit data through control plane signaling according to the data volume, and the user equipment determines to carry data transmission control information and data in the RRC connection establishment finish message transmitted to the eNB according to the pre-negotiation between the user equipment and the eNB.

In this embodiment, data is borne in a NAS PDU in the RRC connection establishment finish message. The data transmission control information includes: data indication information and data transmission finish indication information. In this embodiment, data indication information IE and data transmission finish indication information IE are added to the RRC connection establishment finish message for sending data; and a method for sending the data transmission finish indication information includes making the data transmission finish indication information be borne in the new MAC CE.

A method for defining LCID corresponding to the MAC CE carrying data transmission finish indication information is shown in an uplink share channel LCID table as shown in Table 12:

**Table 12**

| Number | LCID Value |
|---|---|
| 00000 | Common Control Channel |
| 00001-01010 | Logical Channel ID |
| 01011-10111 | Reserved Number |
| 01011 | Data Transmission Finish Indication |
| 11001 | Extension Power Headroom Report |
| 11010 | Power Headroom Report |
| 11011 | Cell-Radio Network Temporary Identity |
| 11100 | Truncated Buffer Status Report |
| 11101 | Short Buffer Status Report |
| 11110 | Long Buffer Status Report |
| 11111 | Filling Information |

That is, a number (01011) is separated from the reserved numbers to define the data transmission finish indication information. After the receiving terminal reads the LCID, it can be known that the corresponding MAC PDU has a MAC CE carrying data transmission finish indication information, and then the data transmission finish indication information in the MAC CE is read out. In this embodiment, the data indication information has a value of "1", indicating that there is data to be sent, and the data transmission finish indication information has a value of "0", indicating that data transmission is unfinished.

Step 1106: the eNB executes processing operation after receiving the data transmission control information, and determines whether data transmission is finished.

The eNB determines whether data receiving is finished, starts a data transmission control timer (e.g., Tsmalldata), and allocates resource for the data to be sent subsequently.

In this embodiment, the eNB determines whether it is finished through the data transmission finish indication information. At this time, the received data transmission finish indication information has a value of "0", indicating that data receiving is unfinished; and the eNB buffers the received data, and continues waiting to receive the transmission unfinished data.

Step 1107: the user equipment continues sending unfinished data and data transmission control information through the RRC connection establishment finish message.

In this embodiment, the data transmission control information is data transmission finish indication information, and the method in Step 1105 is used for the information, i.e., making the data transmission finish indication information be borne in a new MAC CE, separating out a number (01011) from the reserved numbers according the corresponding relationships as shown in Table 12 to define the data transmission finish indication information. After the receiving terminal receives the LCID, it may be known that the corresponding MAC PDU has a MAC CE which carries the data transmission finish indication information, and then the data transmission finish indication information in the MAC CE is read out. In this embodiment, the data transmission finish indication information has a value of "0", indicating that data transmission is unfinished.

Step 1108: the eNB executes processing operation after receiving the data transmission control information, and determines whether data transmission is finished.

In this embodiment, the eNB determines whether it is finished through the data transmission finish indication information. At this time, the received data transmission finish indication information has a value of "0", indicating that data receiving is unfinished; and the eNB buffers the received data, and continues waiting to receive the transmission unfinished data.

Step 1109: the unfinished data and data transmission control information continue to be transmitted through the RRC connection establishment finish message.

In this embodiment, the data transmission control information is data transmission finish indication information, and the method in Step 1105 is used for the information, i.e., making the data transmission finish indication information be borne in a new MAC CE, separating out a number (01011) from the reserved numbers according the corresponding relationships as shown in Table 12 to define the data transmission finish indication information. After the receiving terminal receives the LCID, it may be known that the corresponding MAC PDU has a MAC CE which carries the data transmission finish indication information, and then the data transmission finish indication information in the MAC CE is read out. In this embodiment, the data transmission finish indication information has a value of "0", indicating that data transmission is unfinished.

Step 1110: the eNB executes processing operation after receiving the data transmission control information, and determines whether data transmission is finished. In this embodiment, the eNB determines whether receiving is finished through the data transmission finish indication information. At this time, the received data transmission finish indication information has a value of "0", indicating that data receiving is unfinished; and the eNB buffers the received data, and continues waits to receive the transmission unfinished data.

Step 1111: a data transmission control timer in the eNB expires.

In this embodiment, after Step 1110, the data transmission control timer in the eNB expires, and the eNB determines to send the data and the relevant information to the MME according to the pre-negotiation with the user equipment, and the eNB continues executing a subsequent RRC connection establishment process.

Step 1112: the eNB sends data, data indication information and data transmission finish indication information to the MME through an initial user equipment message.

In this embodiment, data indication information IE and data transmission finish indication information IE are added to the initial user equipment message for sending data, as shown in Table 13:

**Table 13**

| IE/Group Name (Information | Presence) | Range |
|---|---|---|
| Message Type | M | |
| | | |
| Data Indication | O | |
| Data Transmission Finish Indication | O | |

In this embodiment, the data transmission finish indication information has a value of "0", indicating that data transmission is unfinished, and the data indication information has a value of "1", indicating that there are data to be sent.

Step 1113: the MME determines whether the user equipment can send data through control plane.

In this example, it can be determined through the subscription information that the user equipment may send data by a data optimization method. However, the data transmission finish indication information has a value of "0", indicating that data transmission is unfinished, and at this time, the MME determines not to send data to the subsequent core network node, and discards the received data.

Step 1114: the MME determines to continue finishing a subsequent RRC connection process or release an RRC connection. In this example, the MME determines to finish the subsequent RRC connection process according to the pre-negotiation between the user equipment and the MME.

Step 1115: the MME sends an initial context establishment request message to the eNB.

The MME notifies the eNB of connection information corresponding to the user equipment. The connection information includes access stratum security context information, switch limit information, QoS information, tunnel terminal identity and address information of service gate way for user plane, etc.

Step 1116: the eNB sends a security mode command message to the user equipment.

The eNB sends a security mode command to the user equipment or an MTC device to activate security of the user equipment.

Step 1117: the user equipment sends a security mode finish message to the eNB.

The user equipment sends the security mode finish message to the eNB to notify the eNB that security is activated.

Step 1118: the eNB sends an RRC connection reconfiguration message to the user equipment.

The eNB sends the RRC connection reconfiguration message to the user equipment to establish DRB and SRB2 for the user equipment.

It should be noted that Step 1118 may also be carried out before Step 1117.

Step 1119: the user equipment sends an RRC connection reconfiguration finish message to the eNB.

The user equipment sends the RRC connection reconfiguration finish message to the eNB to notify the eNB that data radio bearer and SRB2 configuration is finished.

Step 1120: the eNB sends an initial context establishment response message to the MME.

The eNB sends the initial context establishment response message to the MME. The message carries tunnel terminal identity of the eNB and address information of the eNB for S1 interface user plane downlink service.

It can be seen from the above description that in embodiments in the present invention, for the case that the transmitted data volume is in a certain range or multiple data packets are transmitted, data is sent by an optimized method for transmitting data through control plane signaling, so as to achieve the purpose of reducing signaling overhead caused by data transmission, optimizing network performance, and improving system efficiency. Obviously, a person skilled in the art would understand that the above components and steps in the embodiments of the present invention can be realized by using general purpose calculating device, can be integrated in one calculating device or distributed on a network which consists of a plurality of calculating devices, and preferably they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. Thus, the present invention is not limited to any particular combination of hardware and software.

The above description is only example embodiments of the present invention and is not intended to limit the present invention, and the present invention can have a variety of changes and modifications for ordinary person skilled in the field. Any modification, equivalent replacement, or improvement made without departing from the principle of the present invention should fall within the protection scope of the present invention.

Obviously, those skilled in the art shall understand that the above-mentioned components or steps of the present invention can be realized by using general purpose calculating device, can be integrated in one calculating device or distributed on a network which consists of a plurality of calculating devices. Alternatively, the components or the steps of the present invention can be realized by using the executable program code of the calculating device. Consequently, they can be stored in the storing device and executed by the calculating device, or they are made into integrated circuit component respectively, or a plurality of components or steps thereof are made into one integrated circuit component. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

### Industrial Applicability

The technical solution provided by the embodiments in the present invention may be applied to the field of mechanical communication, so as to solve the problem that the method for sending data through control plane signaling cannot send a large data volume, thereby reducing signaling overhead caused by data transmission, optimize network performance and improve system efficiency.

## Claims

1. A method for transmitting data through control plane signaling, **characterized by** comprising:
user equipment determining whether data volume of currently-to-be-transmitted data exceeds a threshold; and
if the data volume of the currently-to-be-transmitted data exceeds the threshold, the user equipment sending the currently-to-be-transmitted data to an access network device in multiple transmissions by bearing each part of the currently-to-be-transmitted data in a non-access stadium protocol data unit (NAS PDU) in radio resource control (RRC) signaling in each transmission,
wherein the RRC signaling carries data transmission control information, and the data transmission control information is used to instruct the access network device to buffer currently-received data.

2. The method according to claim 1, **characterized in that** the data transmission control information comprises at least one of the following:
data indication information, used for indicating that data is sent through RRC signaling currently;
data transmission finish indication information, used for indicating whether data transmission is finished;
data packet control information, used for indicating, to the access network device, transmission condition of the currently-to-be-transmitted data; or
buffer status report (BSR), used for indicating whether there is data to be sent subsequently.

3. The method according to claim 2, **characterized in that** a method for carrying the data indication information comprises one of the following:
the data indication information being carried in an added information element (IE) in the RRC signaling;
the data indication information being carried in an added media access control element (MAC CE) in the RRC signaling;
the data indication information being carried in reserved bits in MAC subheader.

4. The method according to claim 2, **characterized in that** a method for carrying the data transmission finish indication information comprises one of the following:
the data transmission finish indication information being carried in an added information element (IE) in the RRC signaling;
the data transmission finish indication information being carried in an added media access control element (MAC CE) in the RRC signaling;
the data transmission finish indication information being carried in reserved bits in MAC subheader.

5. The method according to claim 2, **characterized in that** the data packet control information comprises at least one of the following:
transmission unfinished data volume; the number of data packets; and sending times of a single data packet.

6. The method according to any of claims 1 to 5, **characterized in that** the RRC signaling comprises at least one of the following:
an RRC connection establishment finish message;
an up link information transfer message; or
a customized message.

7. The method according to any of claims 1 to 5, **characterized in that** after the user equipment finishes the sending of the currently-to-be-transmitted data, the method further comprises:
the user equipment receiving signaling which is sent from the access network device or a core network device; and
the user equipment establishing a subsequent RRC connection or releasing an RRC connection according to the signaling.

8. A method for transmitting data through control plane signaling, **characterized by** comprising:
an access network device receiving data sent from user equipment, wherein the data is carried in a non-access stadium protocol data unit (NAS PDU) in radio resource control (RRC) signaling;
the access network device buffering the data according to data transmission control information carried in the RRC signaling;
the access network device determining whether the buffered data is complete according to the data transmission control information; and
if the buffered data is complete, the access network device sending the buffered data to a core network device through an S1 message, wherein the S1 message is a message supported by a logic interface between an Evolved Universal Terrestrial Radio Access Network Node B and a Mobility Management Entity (MME), and the S1 message carries data transmission indication information.

9. The method according to claim 8, **characterized in that** the data transmission indication information comprises: data indication information for indicating that data is sent through RRC signaling currently, and/or data transmission finish indication information for indicating whether data transmission is finished.

10. The method according to claim 8, **characterized in that** the access network device determining whether the buffered data is complete according to the data transmission control information comprises one of the following:
the access network device checking a buffer status report (BSR) in the data transmission control information, and if the BSR indicates that no data is to be sent subsequently, determining that the buffered data is complete, or else, determining that the buffered data is incomplete;
the access network device checking data packet control information in the data transmission control information, and if the data packet control information indicates that the number of transmission unfinished data packets is a preset value, determining that the buffered data is complete, or else, determining that the buffered data is incomplete; or
the access network device checking the data transmission finish indication information in the data transmission control information, and if the data transmission finish indication information indicates that data transmission is finished, determining that the buffered data is complete, or else, determining that the buffered data is incomplete.

11. The method according to claim 8, **characterized in that** the S 1 message is one of the following:
an initial user equipment message, an uplink non-access stadium transport message, or a customized message.

12. The method according to claim 8, **characterized in that** after the access network device determining that the buffered data is incomplete, the method further comprises: the access network device starting a data transmission control timer, and when the data transmission control timer expires, the access network device executing one of the following steps:
the access network device sending the data to the core network device through the S 1 message, and finishing a subsequent connection establishment process; or
the access network device releasing the RRC connection of the user equipment, and indicating a reason of the RRC connection release to the user.

13. The method according to claim 9, **characterized in that** the data transmission finish indication information is data transmission finish indication information in the data transmission control information; or the data transmission finish indication information is generated by the access network device according to the result of determining whether the buffered data is complete.

14. A method for transmitting data through control plane signaling, **characterized by** comprising:
a core network device receiving an S1 message sent from an access network device, wherein the S1 message is a message supported by a logic interface between an Evolved Universal Terrestrial Radio Access Network Node B and a Mobility Management Entity (MME), and the S1 message carries data and data transmission indication information;
the core network device determining whether the data is to be sent to a subsequent core network node,
if the data is to be sent to the subsequent core network node, the core network device sending the data to the subsequent core network node, and
if the data is not to be sent to the subsequent core network node, the core network device discarding the data; and
the core network device executing a subsequent radio resource control (RRC) connection or releasing an RRC connection.

15. The method according to claim 14, **characterized in that** the core network device determining whether the data is to be sent to the subsequent core network node comprises at least one of the following:
the core network device determining whether the data is to be sent to the subsequent core network node according to user equipment subscription information corresponding to the data;
the core network device determining whether the data is to be sent to the subsequent core network node according to the data transmission indication information.

16. The method according to claim 14, **characterized in that** the core network device determines to execute the subsequent RRC connection or release the RRC connection according to one of the following information:
user equipment subscription information corresponding to the data, information about whether there is downlink data to be sent in a specific time after the core network device sends data to a subsequent node, and information pre-negotiated between the core network device and user equipment corresponding to the data.

17. User equipment, **characterized by** comprising:
a data volume determination component, set to determine whether the data volume of currently-to-be-transmitted data exceeds a threshold; and
a to-be-transmitted data sending component, set to, if the determination result of the data volume determination component is that the data volume of the currently-to-be-transmitted data exceeds the threshold, send the currently-to-be-transmitted data to an access network device in multiple transmissions by bearing each part of the currently-to-be-transmitted data in a non-access stadium protocol data unit (NAS PDU) in radio resource control (RRC) signaling in each transmission, wherein the RRC signaling carries data transmission control information, and the data transmission control information is used to instruct the access network device to buffer currently-received data.

18. The user equipment according to claim 17, **characterized in that** the user equipment also comprises:
a signaling receiving component, set to receive signaling which is sent from the access network device or a core network device; and
a connection processing component, set to establish a subsequent RRC connection or release an RRC connection according to the signaling received by the signaling receiving component.

19. An access network device, **characterized by** comprising:
a data receiving component, set to receive data sent from user equipment, wherein the data is carried in a non-access stadium protocol data unit (NAS PDU) in radio resource control (RRC) signaling;
a data buffer component, set to buffer the data received by the data receiving component according to the data transmission control information carried in the RRC signaling;
a complete data determination component, set to determine whether the data buffered by the data buffer component is complete according to the data transmission control information; and
a data sending component, set to, if the determination result of the complete data determination component is that the buffered data is complete, send the buffered data to a core network device through an S1 message, wherein the S1 message is a message supported by a logic interface between an Evolved Universal Terrestrial Radio Access Network Node B and a Mobility Management Entity (MME), and the S1 message carries data transmission indication information.

20. The access network device according to claim 19, **characterized in that** the access network device also comprises:
a timer starting component, set to, if the complete data determination component determines that the buffered data is incomplete, start a data transmission control timer; and
a timing processing component, set to, when the data transmission control timer started by the timer starting component expires, send the buffered data to the core network device through the S 1 message, and finish a subsequent connection establishment process; or release the RRC connection of the user equipment, and indicate a reason of the RRC connection release for the user.

21. A core network device, **characterized by** comprising:
a message receiving component, set to receive an S 1 message sent from an access network device, wherein the S1 message is a message supported by a logic interface between an Evolved Universal Terrestrial Radio Access Network Node B and a Mobility Management Entity (MME), and the S1 message carries data and data transmission indication information;
a determination component, set to determine whether the data in an S1 message received by the message receiving component is to be sent to a subsequent core network node;
a data processing component, set to, if the determination result of the determination component is that the data in the S1 message received by the message receiving component is to be sent to the subsequent core network node, send the data to a subsequent core network node; and if the determination result of the determination component is that the data in the S 1 message received by the message receiving component is not to be sent to the subsequent core network node, discard the data; and
a connection processing component, set to, after the data processing component finishes processing of the data, execute a subsequent radio resource control (RRC) connection or release an RRC connection.

22. A system for transmitting data through control plane signaling, **characterized by** comprising user equipment, an access network device and a core network device, wherein the user equipment is the user equipment of claim 17 or 18, the access network device is the access network device of claim 19 or 20, and the core network device is the core network device of claim 21.
